(19) Europäisches Patentamt
European Patent Office
Office européen des brevets

(11) EP 4 230 704 A1

(12) EUROPEAN PATENT APPLICATION

(43) Date of publication:
23.08.2023 Bulletin 2023/34

(21) Application number: 22157618.4

(22) Date of filing: 18.02.2022

(51) International Patent Classification (IPC):
C09D 5/02 (2006.01)          C09D 7/63 (2018.01)
C09D 7/40 (2018.01)          C09D 133/04 (2006.01)
C09D 7/61 (2018.01)          B05D 7/00 (2006.01)

(52) Cooperative Patent Classification (CPC):
(C-Sets available)
C09D 7/69; B05D 5/02; B05D 7/544; C09D 5/024;
C09D 7/61; C09D 125/14; B05D 5/08;
B05D 2401/20; B05D 2601/20; C08F 212/08;
C08K 3/26; C08K 2003/265; C08K 2003/267

(Cont.)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Jotun A/S
3202 Sandefjord (NO)

(72) Inventor: The designation of the inventor has not
yet been filed

(74) Representative: Marks & Clerk LLP
15 Fetter Lane
London EC4A 1BW (GB)

(54) COMPOSITION

(57) The invention provides a coating system for preparing a multi-layered coating, preferably a textured and/or tinted, multi-layer coating, wherein said system comprises a first coating composition and a second coating composition, wherein:

said first coating composition comprises:
(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(iii) 10-50 wt% water,

and said first coating composition has a PVC of 60-89 and a Stormer viscosity of 80-120 KU, and
said second coating composition comprises:
(iv) an organic polymer dispersion;
(v) an inorganic filler (a) having a $D_{98}$ of greater than 100 $\mu$m
(vi) an inorganic filler (b) having a $D_{98}$ of 25-250 $\mu$m
(vii) preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and

(viii) water, preferably 5-30 wt% water,

and said second coating composition has a PVC of 60-89.

Figure 1(d)

(52) Cooperative Patent Classification (CPC): (Cont.)

C-Sets
C08F 212/08, C08F 220/1804, C08F 220/06,
C08F 216/1433

**Description**

INTRODUCTION

The present invention relates to a coating system for preparing a multi-layered coating, including a textured and/or tinted multi-layered coating, comprising a first coating composition and a second coating composition and to methods of preparing such coating systems. The invention also relates to a multi-layered coating on a surface, e.g. the surface of a mineral substrate, wherein the coating is formed from the coating system, as well as to a method of preparing a multi-layered coating on a surface. Additionally, the invention relates to coating compositions per se and to containers containing the coating compositions.

BACKGROUND

Commercially available textured coatings, typically used externally on buildings and structures, usually comprise multiple layers, e.g. 3 or more layers. A conventional textured coating comprises a primer layer, a textured layer, and at least one top coat. The different layers in the coating are needed to provide the range of properties the textured coating must confer. For example, the primer layer is needed because textured layers usually have poor adhesion to substrates, the textured layer is needed to provide hiding and texture and the top coat(s) is needed to provide UV and weather resistance, dirt pick up resistance as well as the desired colour.

A disadvantage of commercially available textured coatings is that they are difficult, sometimes impossible, to tint. This is because the composition forming the textured layer tends to be of very high viscosity, making it impossible to mix in tinters. As a result, colour pigments have to be incorporated into the compositions during their general preparation, but this severely limits the range of colours that can be offered to customers. Another disadvantage of the commercially available textured coatings is that they are expensive and time consuming to make and apply, due to the need for 3 or more different layers. Moreover, the application process is clearly complicated due to the presence of numerous layers, making it more challenging to reliably produce high quality textured coatings.

SUMMARY OF THE INVENTION

Viewed from a first aspect, the present invention provides a coating system for preparing a multi-layered coating, wherein said system comprises a first coating composition and a second coating composition, wherein:

said first coating composition comprises:

(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(iii) 10-50 wt% water,

and said first coating composition has a PVC of 60-89 and a Stormer viscosity of 80-120 KU, and said second coating composition comprises:

(iv) an organic polymer dispersion;
(v) an inorganic filler (a) having a $D_{98}$ of greater than 100 $\mu$m;
(vi) an inorganic filler (b) having a $D_{98}$ of 25-250 $\mu$m;
(vii) preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(viii) water, preferably 5-30 wt% water,

and said second coating composition has a PVC of 60-89.

Viewed from a further aspect, the present invention provides a multi-layered coating on a surface, preferably on a surface of a mineral substrate, wherein said coating is formed from a coating system as hereinbefore defined.
Viewed from a further aspect, the present invention provides a use of a coating system as hereinbefore described to form a multi-layered coating on a substrate, preferably a mineral substrate.

Viewed from a further aspect, the present invention provides a method of preparing a multi-layered coating on a surface, wherein said method comprises:

(i) applying a first coating composition as hereinbefore defined;
(ii) drying said first coating composition to form a first coating layer;
(iii) applying a second coating composition as hereinbefore defined; and
(iv) drying said second coating composition to form a second coating layer.

Viewed from a further aspect, the present invention provides a method of preparing a coating system as hereinbefore defined, comprising:

(i) preparing a first coating composition by mixing an organic polymer dispersion, at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler; and 10-50 wt% water; and
(ii) preparing a second coating composition by mixing an organic polymer dispersion, an inorganic filler (a) having a $D_{98}$ of greater than 100 $\mu$m, an inorganic filler (b) having a $D_{98}$ of 25-250 $\mu$m, and preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c) and 5-30 wt% water.

Viewed from a further aspect, the present invention provides a base coating composition comprising:

(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(iii) optionally $TiO_2$;
(iv) less than 0.5 wt% colour pigment other than $TiO_2$; and
(v) 5-30 wt% water,

and said coating composition has a PVC of 60-89.

Viewed from a further aspect, the present invention provides a coating composition comprising:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m; wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) preferably at least four colour pigments;
(vi) preferably a dry film biocide; and
(vii) water, preferably 10-50 wt% or 5-30 wt% water

and said coating composition has a PVC of 60-89.

Viewed from a further aspect, the present invention provides a coating composition comprising:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m; wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(v) water, preferably 10-50 wt% water.

and said coating composition has a PVC of 60-89 and a Stormer viscosity of 80-120 KU.

Viewed from a further aspect, the present invention provides a coating composition comprising:

(i) an organic polymer dispersion;

(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(iii) a dry film biocide; and
(iv) 10-50 wt% water,

and said coating composition has a PVC of 60-89 and a Stormer viscosity of 80-120 KU.

Viewed from a further aspect, the present invention provides a coating composition comprising:

(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(iii) at least four colour pigments; and
(iv) 10-50 wt% water,

and said coating composition has a PVC of 60-89 and a Stormer viscosity of 80-120 KU.

Viewed from a further aspect, the present invention provides a coating composition comprising:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) a dry film biocide; and
(vi) water, preferably 1-30 wt% water

and said coating composition has a PVC of 60-89.

Viewed from a further aspect, the present invention provides a coating composition comprising:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) at least four colour pigments; and
(vi) water, preferably 1-30 wt% water

and said coating composition has a PVC of 60-89.

Viewed from a further aspect, the present invention provides a container comprising a coating composition as hereinbefore defined.

DEFINTIONS

As used herein the term "coating system" refers to a combination of at least two coating compositions that are intended to be used to form different layers of a multi-layered coating.

As used herein the term "coating composition" refers to a composition that, when applied to a surface, forms a film or coating thereon.

As used herein the term "textured" refers to a coating that has an uneven or rough surface. The hills and valleys of the surface are clearly seen with the naked eye. To get the texture, the coating is typically applied in high film thickness (e.g. a wet film thickness of 200-1600 $\mu$m).

As used herein the term colour pigment is a pigment that is added to a composition to give colour. Colour pigments include white pigments, such as $TiO_2$.

As used herein the term "base coating composition" is a coating composition that comprises less than 0.5 wt% of colour pigments other than $TiO_2$. A base coating composition preferably comprises $TiO_2$ as the only colour pigment. A base coating composition can comprise different amounts of $TiO_2$ to enable different shades and colours to be obtained.

A base coating composition can also contain no $TiO_2$ to enable dark colours to be obtained.

As used herein the term "tinted" refers to a coating that is coloured by the presence of tinters or colorants.

As used herein the term "tinter" refers to a colorant that is added to a coating composition to provide a desired colour. Typically tinters are added after the general preparation of the base coating composition to provide a coloured coating composition. Typically tinters comprise colour pigments and optionally other ingredients such as water, solvent and additives.

As used herein the term "multicolour tinting system" refers to a tinting machine comprising a plurality of tinters, and software containing colour formulations. When the multicolour tinting system is activated by a specific colour being chosen, a specific combination and amount of tinters are added to the base coating composition by the tinting machine, according to its software. The coating composition is mixed, preferably with a mixing machine, giving a coating composition with homogenous colour.

As used herein the term "organic polymer dispersion" refers to a dispersion of organic polymer particles in a continuous liquid phase. Typically, the continuous liquid phase is aqueous. Usually the organic polymer particles present in this dispersion are the film forming polymer present in the coating composition. Thus these particles coalesce after application and during drying.

As used herein the term "inorganic filler" refers to particles comprising, preferably consisting of, inorganic material. The term includes uncoated as well as coated particles.

As used herein the term $D_{98}$ refers to the size at which 98% of the particles have a diameter smaller than the value recited.

As used herein the term $D_{50}$ refers to the size at which 50% of the particles have a diameter smaller than the value recited.

As used herein the term "MFFT" refers to "minimal film formation temperature" as determined by ASTM D2354-10e1.

As used herein the term "poly(meth)acrylate" refers to a polymer comprising repeat units derived from (meth)acrylate monomers. Generally, a poly(meth)acrylate will comprise at least 50 wt% repeat units derived from (meth)acrylate monomers, i.e. acrylate and/or methacrylate monomers.

As used herein the term "biocide" refers to compounds that act to prevent biological growth, e.g. growth of mould and/or algae. Biocides are also referred to as antimicrobial agents, biologically active compounds, (dry) film preservatives, (dry) film biocides, in can preservatives, in can biocides, and toxicants. Biocides can also be named according to the target microorganism e.g. fungicide, mildewicide, algicide, algaecide and bactericide.

As used herein the term "dry film biocide" refers to compounds that are used for the preservation of films or coatings by the control of microbial deterioration or algal growth in order to protect the initial properties of coatings formed from the coating compositions in which they are present.

As used herein the term "weight % (wt%)", when used in relation to individual constituents of the composition, e.g. rheology modifier, biocide etc., refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

DETAILED DESCRIPTION OF THE INVENTION

The present invention relates to a coating system for preparing a multi-layered coating, wherein said system comprises a first coating composition and a second coating composition, wherein:

said first coating composition comprises:

(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(iii) 10-50 wt% water,

and said first coating composition has a PVC of 60-89 and a Stormer viscosity of 80-120 KU, and
said second coating composition comprises:

(iv) an organic polymer dispersion;

(v) an inorganic filler (a) having a $D_{98}$ of greater than 100 $\mu$m;
(vi) an inorganic filler (b) having a $D_{98}$ of 25-250 $\mu$m;
(vii) preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(viii) water, preferably 5-30 wt% water,

and said second coating composition has a PVC of 60-89.

Preferably the second coating composition comprises an inorganic filler (c) having a $D_{98}$ of 5-100 $\mu$m.
Preferably the multi-layered coating is textured.
Preferably the multi-layered coating is tinted.
Advantageously the coating system of the present invention produces two-layered, textured coatings having a comparable performance to commercially available four-layered textured coatings. Specifically, the two-layered coatings produced by the coating system of the present invention have a textured look, which is aesthetically pleasing and achieves hiding, and the coating has good adhesion to the substrate, crack resistant, water resistant, UV resistant, and has low dirt pick up. The fact that the coating systems of the present invention produce a textured coating comprising only two layers means it is cheaper, and easier, to use to reliably produce suitable textured coatings.
A further significant advantage of the coating systems of the present invention is that they are tintable, i.e. tinters may be added to one or both of the coatings compositions forming the coating system. This is particularly beneficial because different tints may be added to each of the coating compositions, and therefore layers, to achieve desirable aesthetic effects. This is a significant advantage over commercially available textured coatings, which generally cannot be tinted due to their highly viscous nature.

*Coating system*

The coating systems of the invention are preferably a combination of a first coating composition and a second coating composition that are intended to be used to form different layers of a multi-layered coating, and preferably a multi-layered textured coating.
Preferably the first and second coating compositions are not the same. Preferably the first coating composition is prepared by diluting the second coating composition, e.g. with water.

*First coating composition*

The first coating composition comprises an organic polymer dispersion, inorganic fillers, and water. Optionally, the first coating composition comprises a dry film biocide and/or at least 4 colour pigments. Optionally the first coating composition comprises organic solvent, vegetable drying oils, rheology modifier, wetting and dispersing agents and/or additives.

*Organic polymer dispersion*

The first coating composition of the present invention comprises an organic polymer dispersion, and preferably an organic copolymer dispersion. As is well known to a person skilled in the art, a dispersion is a composition comprising polymer particles dispersed in a solvent. The dispersed polymer may be any polymer suitable for use as a film-forming polymer in coating compositions. Such polymers are well known in the art. The liquid phase, i.e. solvent of the dispersion, is preferably aqueous. More preferably the liquid phase comprises water, e.g. the liquid phase is at least 95 wt% water. The liquid phase optionally comprises solvents, and additives.
In the first coating composition, the organic polymer dispersion preferably comprises a polymer having a minimum film formation temperature (MFFT) of 0-35 °C, more preferably 10-25 °C, and still more preferably 15-20 °C. This is advantageous because it makes it possible to minimise the amount of solvent needed in the composition, and thereby reduce the VOC of the coating composition.
In the first coating composition, the organic polymer dispersion preferably comprises a polymer comprising monomers selected from (meth)acrylate, acrylamide, vinyl and/or styrenic monomers (e.g. styrene, $\alpha$-methyl styrene, vinyl toluene, vinyl acetate, vinyl esters of versatic acids). More preferably the organic polymer dispersion comprises poly(meth)acrylates, (meth)acrylate copolymers, vinyl-(meth)acrylate copolymers, styrene-(meth)acrylate copolymers, polyvinyl acetate copolymers and copolymers of vinyl esters of versatic acids. Still more preferably the organic polymer dispersion comprises a poly(meth)acrylate dispersion.
The poly(meth)acrylate present in a poly(meth)acrylate dispersion preferably present in the first coating composition may be a homopolymer or a copolymer. Preferably the poly(meth)acrylate is a copolymer. Particularly preferably the poly(meth)acrylate comprises at least two (e.g. 2, 3, 4 or more) different (meth)acrylate monomers.

Preferred poly(meth)acrylate dispersions present in the first coating composition comprise a poly(meth)acrylate polymer comprising at least 50 wt% (meth)acrylate monomers, based on the dry weight of the polymer. Examples of poly(meth)acrylate polymers comprising non-acrylate monomers include poly(meth)acrylate-polyurethanes, poly(meth)acrylate-polyesters and poly(meth)acrylate-silicones/siloxanes. Such polymers typically comprise a poly(meth)acrylate backbone and side chains of polyurethane, polyester or silicone/siloxane. The side chains are typically grafted onto the poly(meth)acrylate backbone. When the poly(meth)acrylate present in the poly(meth)acrylate dispersion comprises non-(meth)acrylate monomers, the other monomers are preferably selected from acrylamide, vinyl and/or styrenic monomers such as styrene, $\alpha$-methyl styrene, vinyl toluene, vinyl acetate, vinyl esters of versatic acids and mixtures thereof. Examples of these polymers are styrene-(meth)acrylate, vinyl-(meth)acrylate, polyvinylacetate-(meth)acrylate.

For the preparation of multi-layered coatings for exterior use, the poly(meth)acrylate dispersion preferably comprises a poly(meth)acrylate polymer comprising at least 60 wt%, more preferably at least 75 wt%, still more preferably at least 90 wt%, and yet more preferably at least 95 wt% (meth)acrylate monomers, based on the dry weight of the polymer. Preferred poly(meth)acrylate polymers comprise 50-100 wt%, more preferably 60-100 wt%, still more preferably 75-100 wt%, yet more preferably 90-100 wt% and especially preferably 95-100 wt% (meth)acrylate monomers, based on the dry weight of the polymer. Particularly preferably, however, poly(meth)acrylate polymers present in the poly(meth)acrylate dispersion comprise 100 wt% (meth)acrylate monomers, i.e. they do not comprise any monomers of another type, based on the dry weight of the polymer.

A preferred first coating composition comprises 4-30 wt%, preferably 5-25 wt%, and still more preferably 6-20 wt% of organic polymer dispersion, based on the total weight of the first coating composition.

*Inorganic fillers*

The first coating composition comprises at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m. The $D_{98}$ of said inorganic filler (a) is greater than the $D_{98}$ of said inorganic filler (b) and the $D_{98}$ of said inorganic filler (b) is greater than the $D_{98}$ of said inorganic filler (c). When only fillers (a) and (c) are present, this means that the $D_{98}$ of said inorganic filler (a) is greater than the $D_{98}$ of inorganic filler (c).

Preferably the first coating composition comprises inorganic filler (a) and inorganic filler (b).

Preferably the first coating composition comprises inorganic filler (a) and inorganic filler (c).

Preferably the first coating composition comprises inorganic filler (b) and inorganic filler (c).

More preferably the first coating composition comprises inorganic filler (a), inorganic filler (b) and inorganic filler (c).

In the first coating composition, said inorganic filler (a) preferably has a $D_{98}$ of greater than 200 $\mu$m, more preferably greater than 250 $\mu$m and still more preferably greater than 300 $\mu$m. More preferably said inorganic filler (a) has a $D_{98}$ of 105 to 800 $\mu$m, more preferably 200-700 $\mu$m, still more preferably 250-650 $\mu$m and yet more preferably 300-600 $\mu$m.

In the first coating composition, said inorganic filler (a) preferably has a $D_{50}$ of 50-450 $\mu$m, more preferably 70-400 $\mu$m, still more preferably 90-350 $\mu$m and yet more preferably 100-300 $\mu$m.

The size of inorganic filler (a) is preferably measured by laser diffraction, preferably as described in the examples section herein. However, when $D_{98}$ is greater than about 300 $\mu$m, it has been found that there can be significant error in laser diffraction size measurements. Thus more preferably the size of inorganic filler (a), particularly when it is greater than about 300 $\mu$m, is alternatively or additionally measured by sieves. Still more preferably the size of inorganic filler (a) is additionally measured by sieves, e.g. according to ASTM C136/C136M-19, using Retsch AS 200 control instrument and Retsch test sieves 45 $\mu$m, 100 $\mu$m, 200 $\mu$m, 300 $\mu$m and 400 $\mu$m. Preferably the test method is as described in the examples herein.

When the size of inorganic filler (a) is measured by sieves, preferably at least one, more preferably at least two, still more preferably at least three and yet more preferably all of the below conditions are satisfied:

On the 300 $\mu$m sieve < 10 wt%, more preferably < 5 wt% particles are retained;
On the 200 $\mu$m sieve 5-50 wt%, more preferably 10-40 wt% particles are retained;
On the 100 $\mu$m sieve 20-60 wt%, more preferably 25-50 wt% particles are retained;
On the 45 $\mu$m sieve 10-40 wt%, more preferably 15-35 wt% particles are retained;
Below 45 $\mu$m sieve <40 wt%, more preferably <35 wt% particles are retained.

Particularly preferably 5-50 wt %, more preferably 10-40 wt %, of the particles are retained by the 200 $\mu$m sieve

and 20-60 wt%, more preferably 25-50 wt% of the particles are retained by 100 $\mu$m sieves. Yet more preferably 10-40 % of the particles are retained by the 200 $\mu$m sieve, 25-50 % of the particles are retained by 100 $\mu$m sieves and 15-30 wt% of the particles are retained by the 45 $\mu$m sieve.

Suitable inorganic filler particles for use as inorganic filler (a) exist in different forms, e.g. spherical, lamellar, nodular and irregular.

Representative examples of suitable inorganic filler (a) include calcite (calcium carbonate, $CaCO_3$), dolomite (calcium magnesium carbonate, $CaMg(CO_3)_2$), nepheline syenite, barium sulphate, calcium silicate, magnesium silicate, sodium silicate, silica sand, feldspar, talc, kaolin, wollastonite (calcium metasilicate), wollastonite mixed with barium sulfate, calcium phosphate, magnesium phosphate, perlite and other porous fillers having a low coefficient of thermal expansion (CTE), pumice, alumina, sodium metasilicate, magnesium metasilicate, sintered glass frit, quartz glass powder, glass rods, glass whiskers, and chopped glass.

Preferred inorganic fillers (a) are selected from calcite (calcium carbonate, $CaCO_3$) and dolomite (calcium magnesium carbonate, $CaMg(CO_3)_2$). Representative examples of suitable sources of calcite (calcium carbonate) include marble and limestone. A representative example of a suitable source of dolomite (calcium magnesium carbonate) is dolomite marble. Preferably inorganic filler (a) is calcite marble or dolomite marble.

Optionally the inorganic filler (a) is coated or surface treated. The coating or surface treatment may, for example, decrease the surface tension or improve the compatibility with the organic binders present in the coating composition.

A preferred first coating composition comprises 10-60 wt%, preferably 20-55 wt%, and still more preferably 25-45 wt% of inorganic filler (a), based on the total weight of the first coating composition.

In the first coating composition, said inorganic filler (b) preferably has a $D_{98}$ of 25-250 $\mu$m, more preferably 50-200 $\mu$m, still more preferably 70-150 $\mu$m and yet more preferably 90-125 $\mu$m.

In the first coating composition, said inorganic filler (b) preferably has a $D_{50}$ of 5-150 $\mu$m, more preferably 7-100 $\mu$m, still more preferably 10-50 $\mu$m and yet more preferably 13-20 $\mu$m.

The size of inorganic filler (b) is preferably measured by laser diffraction, preferably as described in the examples section herein.

Suitable inorganic filler particles for use as inorganic filler (b) exist in different forms, e.g. spherical, lamellar, nodular and irregular.

Representative examples of suitable inorganic filler (b) include calcite (calcium carbonate, $CaCO_3$), dolomite (calcium magnesium carbonate, $CaMg(CO_3)_2$), nepheline syenite, barium sulphate, calcium silicate, magnesium silicate, sodium silicate, silica sand, feldspar, talc, kaolin, wollastonite (calcium metasilicate), wollastonite mixed with barium sulfate, calcium phosphate, magnesium phosphate, perlite and other porous fillers having a low coefficient of thermal expansion (CTE), pumice, alumina, sodium metasilicate, magnesium metasilicate, sintered glass frit, quartz glass powder, glass rods, glass whiskers, and chopped glass.

Preferred inorganic fillers (b) are selected from calcite (calcium carbonate, $CaCO_3$), dolomite (calcium magnesium carbonate, $CaMg(CO_3)_2$), nepheline syenite, feldspar and talc. Representative examples of suitable sources of calcite (calcium carbonate) include marble, limestone and chalk. A representative example of a suitable source of dolomite (calcium magnesium carbonate) is dolomite marble. Preferably inorganic filler (b) is calcite marble or limestone or dolomite marble.

Optionally the inorganic filler (b) is coated or surface treated. The coating or surface treatment may, for example, decrease the surface tension or improve the compatibility with the organic binders present in the coating composition.

A preferred first coating composition comprises 2-30 wt%, preferably 3-25 wt%, and still more preferably 4-20 wt% of inorganic filler (b), based on the total weight of the first coating composition.

In the first coating composition, said inorganic filler (c) preferably has a $D_{98}$ of 10-70 $\mu$m, more preferably 20-60 $\mu$m and still more preferably 35-55 $\mu$m.

In the first coating composition, said inorganic filler (c) preferably has a $D_{50}$ of 2-50 $\mu$m, more preferably 4-35 $\mu$m, still more preferably 6-25 $\mu$m and yet more preferably 8-14 $\mu$m.

The size of inorganic filler (c) is preferably measured by laser diffraction, preferably as described in the examples section herein.

Suitable inorganic filler particles for use as inorganic filler (c) exist in different forms, e.g. spherical, lamellar, nodular and irregular.

Representative examples of suitable inorganic filler (c) include calcite (calcium carbonate, $CaCO_3$), dolomite (calcium magnesium carbonate, $CaMg(CO_3)_2$), nepheline syenite, barium sulphate, calcium silicate, magnesium silicate, sodium silicate, silica sand, feldspar, talc, kaolin, wollastonite (calcium metasilicate), wollastonite mixed with barium sulfate, calcium phosphate, magnesium phosphate, perlite and other porous fillers having a low coefficient of thermal expansion (CTE), pumice, alumina, sodium metasilicate, magnesium metasilicate, sintered glass frit, quartz glass powder, glass rods, glass whiskers, and chopped glass.

Preferred inorganic fillers (c) are selected from calcite (calcium carbonate, $CaCO_3$), dolomite (calcium magnesium carbonate, $CaMg(CO_3)_2$), nepheline syenite, feldspar and talc. Representative examples of suitable sources of calcite (calcium carbonate) include marble, limestone and chalk. A representative example of a suitable source of dolomite (calcium magnesium carbonate) is dolomite marble. Preferably inorganic filler (c) is calcite marble or limestone or dolomite marble.

A preferred first coating composition comprises 0.1-30 wt%, preferably 0.5-25 wt%, and still more preferably 1-20 wt% of inorganic filler (c), based on the total weight of the first coating composition.

*Water*

In a preferred coating system of the present invention the first coating composition comprises a greater wt% water than said second coating composition.

The water present in the first coating composition derives from the organic polymer dispersion, which typically has an aqueous continuous phase, other components present in the composition which are supplied in water and water which is added to the overall mixture. Optionally, water may be added after the first coating composition is tinted and/or immediately prior to application. The water added to the overall mixture forming the composition is preferably desalinated water, or soft or pure tap water. Preferably the pH of the water is 6.0-8.0.

Preferred first coating compositions of the invention comprise 15-40 wt%, more preferably 20-35 wt% and still more preferably 25-34 wt% water, based on the total weight of the first coating composition.

Preferred first coating compositions of the invention comprise 20-80 vol%, more preferably 30-65 vol%, still more preferably 35-60 vol%, and yet more preferably 45-58 vol% water, based on the total volume of the first coating composition.

*Biocides*

The first coating composition preferably comprises a biocide. The biocide may be inorganic, organometallic or organic. Preferred biocides present in the compositions of the invention are organic agents. Suitable biocides are commercially available.

The first coating composition optionally comprises in can biocide and/or dry film biocide. Mixtures of different biocides may also be employed. Some preferred first coating compositions of the present invention comprise at least one dry film biocide.

Representative examples of suitable in can biocides that may be present in the first coating compositions include:

Isothiazolines: Reaction mass of 5-chloro-2-methyl-4-isothiazolin-3-one and 2-methyl-2H-isothiazol-3-one (3:1) (CIT/MIT) (0.0001-0.01% (1-100 ppm)); 5-chloro-2-methyl-4-isothiazolin-3-one (CIT) (0.0001-0.01% (1-100 ppm)); 2-Methyl-4-isotiazolin-3-one (MIT)(0.0001-0.05 (1-500 ppm)); 2-Methyl-1,2-Benzisothiazol-3(2H)-one (MBIT)(0.0001-0.05 (1-500 ppm)); 1,2-Benzisothiazolin-3-one (BIT)(0.0001-0.05 (1-500 ppm)); 2-Octyl-2H-isothiazol-3-one (OIT)(0.0001-0.5% (1-5000 ppm)); 2-butyl-benzo[d]isothiazol-3-one (BBIT)(0.0001-0.5% (1-5000 ppm)); Amides/Ureas: Benzamide, 2,2'-dithiobis (DTBMA)(0.0001-0.05% (1-500 ppm)), 2,2-dibromo-2-cyanoacetamide (DBNPA)(0.0001-0.05% (1-500 ppm));

Pyrithiones: Zinc pyrithione (ZnPT)(0.0001-0.05% (1-500 ppm)); Sodium pyrithione (NaPT)(0.0001-0.05% (1-500 ppm));

Organohalogens: 2-Bromo-2-nitro-1,3-propanediol (Bronopol)(0.001-0.05% (1-500 ppm);

Carbamates: 3-iodo-2-propynylbutylcarbamate (IPBC)(0.01-0.5% (100-5000 ppm));

Silver chemistry: Reaction mass of titanium dioxide and silver chloride (0.0001-0.5% (1-5000 ppm)); and

Formaldehyde donor/$CH_2O$ adducts: N,N-Methylenebismorpholine (MBM)(0.0001-0.5% (1-5000 ppm)); (ethylenedioxy)dimethanol (EDDM) (0.0001-0.5% (1-5000 ppm)); $\alpha, \alpha', \alpha''$-trimethyl-1,3,5-triazine-1,3,5(2H,4H,6H)-triethanol (HPT); 3,3'-methylenebis[5-methyloxazolidine] (Oxazolidin/MBO) (0.0001-0.5% (1-5000 ppm)); Sodium N-(hydroxymethyl)glycinate; Tetrahydro-1,3,4,6-tetrakis(hydroxymethyl)imidazo[4,5-d]imidazole-2,5(1H,3H)-dione (TMAD)(0.0001-0.5% (1-5000 ppm)); Tetrakis(hydroxymethyl)phosphonium sulphate(2:1) (THPS) ( 0.0001-0.5% (1-5000 ppm)); Methenamine 3-chloroallylochloride (CTAC)(0.0001-0.5% (1-5000 ppm)); 2,2',2"-(hexahydro-1,3,5-triazine-1,3,5-triyl)triethanol (HHT)( 0.0001-0.5% (1-5000 ppm)); 1,3-bis(hydroxymethyl)-5,5-dimethylimidazolidine-2,4-dione (DMDMH)(0.0001-0.5% (1-5000 ppm)); 7a-ethyldihydro-1H,3H,5H-oxazolo[3,4-c]oxazole (EDHO)(0.0001-0.5% (1-5000 ppm)); cis-1-(3-chloroallyl)-3,5,7-triaza-1-azoniaadamantanechloride (cis CTAC)(0.0001-0.5% (1-5000 ppm)); (benzyloxy)methanol(0.0001-0.5% (1-5000 ppm)).

Representative examples of suitable dry film biocides that may be present in the first coating composition include:

Isothiazolines: 4,5-Dichlor-2-n-octyl-4-isotiazolin-3-one (DCOIT)(0.05-0.5% (500-5000 ppm); 2-Octyl-2H-isothiazol-3-one (OIT)(0.1-0.4% (1000-4000 ppm)); 2-butyl-benzo[d]isothiazol-3-one (BBIT)(0.0001-0.5% (1-5000 ppm)); 2-thiazol-4-yl-1H-benzoimidazole (Thiabendazole)(0.01-0.5% (100-5000 ppm));

Azoles: Methyl (E)-2-{2-[6-(2-cyanophenoxy)pyrimidin-4-yloxy]phenyl}-3-methoxyacrylate (Azoxystrobin)(0.01-0.5% (100-5000 ppm)); 1-[[2-(2,4-dichlorophenyl)-4-propyl-1,3-dioxolan-2-yl]methyl]-1H-1,2,4-triazole (Propiconazole)(0.01-0.5% (100-5000 ppm)); 1-(4-chlorophenyl)-4,4-dimethyl-3-(1,2,4-triazol-1-ylmethyl)pentan-3-ol (Tebuconazole)(0.01-0.5% (100-5000 ppm));

Amides/Ureas: 3-(3,4-dichlorophenyl)-1,1-dimethylurea (Diuron)(0.1-5.0% (1000-50,000 ppm)); 3-(4-Isopropylphenyl)-1,1-dimethylurea (Isoproturon)(0.01-5.0% (100-50,000 ppm))

Pyrithiones: Zinc pyrithione (ZnPT)(0.0001-0.05% (1-500 ppm)); Sodium pyrithione (NaPT)(0.0001-0.05% (1-500 ppm));

Organohalogens: 4-(2,2-difluoro-1,3-benzodioxol-4-yl)-1H-pyrrole-3-carbonitrile (Fludioxonil)( 0.01-0.5% (100-5000 ppm)); Dichloro-N-[(dimethylamino)sulphonyl] fluoro-N-(ptolyl)methanesulphenamide (Tolylfluanid)( 0.01-0.5% (100-5000 ppm));

Carbamates: 3-iodo-2-propynylbutylcarbamate (IPBC)( 0.05-0.5% (500-5000 ppm)); Methyl 2-benzimidazoie carbamate (Carbendazim)( 0.01-0.5% (100-5000 ppm))

Silver chemistry: Reaction mass of titanium dioxide and silver chloride (0.0001-0.5% (1-5000 ppm)); Silver copper zeolite (0.0001-0.5% (1-5000 ppm)); Silver nitrate (0.0001-0.5% (1-5000 ppm)); Silver phosphate glass (0.0001-0.5% (1-5000 ppm)); Silver sodium hydrogen zirconium phosphate (0.0001-0.5% (1-5000 ppm)); Silver zeolite (0.0001-0.5% (1-5000 ppm)); Silver zinc zeolite (0.0001-0.5% (1-5000 ppm)); and

Triazines: (4E)-4-(Ethylimino)-N-(2-methyl-2-propanyl)-6-(methylsulfanyl)-1,4-dihydro-1,3,5-triazin-2-amine (Terbutryn)( 0.1-5.0% (1000-50,000 ppm)).

Preferably the dry film biocide is selected from diuron, terbutryn, carbendazim, zinc pyrithione, 2-octyl-2H-isothiazol-3-one (OIT), 4,5-dichlor-2-n-octyl-4-isotiazolin-3-one (DCOIT), 3-iodo-2-propynylbutylcarbamate (IPBC) and mixtures thereof.

Preferably the total amount of biocide (in can and dry film biocides) present in the first coating composition is 0.01-7.0 wt%, more preferably 0.05-5.0 wt% and still more preferably 0.1-4.0 wt%, based on the total weight of the first coating composition. It should be understood that the optimal amount of biocide varies depending on which type and/or combination of biocide is employed. Preferably the amount of dry film biocide present in the first coating composition is 0.01-6.5 wt%, more preferably 0.05-4.5 wt% and still more preferably 0.1-3.5wt%, based on the total weight of the first coating composition.

*Colour pigments*

Optionally the first coating composition comprises at least 2 colour pigments, more preferably at least 3 colour pigments, and still more preferably at least 4 colour pigments. Preferably the first coating composition comprises 2-8 colour pigments, more preferably 3-6 colour pigments and still more preferably 4-6 colour pigments.

Optionally the first coating composition comprises $TiO_2$ as a colour pigment. $TiO_2$ is preferred in first coating compositions which are relatively light in colour. Preferably $TiO_2$ is incorporated into the first coating composition during its general preparation.

Preferably the other colour pigments (i.e. those other than TiO2) are incorporated into the first coating composition in a post addition step, more preferably with a multicolour tinting system. This is highly advantageous as it means the first coating composition can be coloured, as desired, shortly before purchase.

Representative examples of suitable colour pigments include inorganic pigments, organic pigments or a mixture thereof.

Representative examples of suitable inorganic pigments include metal oxides (e.g. iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. A huge range of suitable pigments are commercially available.

Non-infrared-absorptive pigments may also be used.

Preferably the total amount of $TiO_2$ present in the first coating composition is 0-20 wt%, more preferably 0-15 wt% and still more preferably 0-12 wt%, based on the total weight of the first coating composition. Some first coating compositions, e.g. those of relatively lighter colour, comprise 1-20 wt%, more preferably 5-15 wt% and still more preferably 6-12 wt% of $TiO_2$, based on the total weight of the first coating composition.

The amount of colour pigments vary depending on chosen colour. The total amount of colour pigments present in the first coating composition may be 0.01-10.0 wt%, preferably 0.05-7.0 wt% and more preferably 0.1-6.0 wt%, based on the total weight of the first coating composition.

*Organic solvent*

The first coating composition optionally comprises an organic solvent. The solvent present may derive from components present in the composition that are provided in solvents and/or from solvent added into the composition. The solvent is preferably volatile. Suitable solvents present in the first coating composition of the invention are commercially available.

Examples of suitable organic solvents and thinners are monopropylene glycol, ethylene glycol methyl ether acetate, diethylene glycol n-butyl ether acetate, propylene glycol methyl ether acetate; ethers such as dipropylene glycol butyl ether, dipropylene glycol propyl ether, propylene glycol propyl ether, propylene glycol butyl ether, ethylene glycol monobutyl ether, diethylene glycol monobutyl ether, ethylene glycol dimethyl ether, diethylene glycol dimethyl ether, dibutyl ether, dioxane, tetrahydrofuran; alcohols such as propylene glycol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners.

If an organic solvent is present in the first coating composition of the invention, the organic solvent is preferably selected from 2,2,4-trimethyl-1,3-pentanediol monoisobutyrate (texanol), diethylene glycol monobutyl ether, monopropylene glycol, dipropylene glycol butyl ether and mixtures thereof.

The amount of organic solvent present in the first coating composition is preferably as low as possible as this minimize the VOC content. Preferably organic solvent is present in the first coating composition in an amount of 0-5.0 wt%, more preferably 0-4.0 wt% and still more preferably 0.5-3.0 wt% based on the total weight of the first coating composition. The skilled person will appreciate that the organic solvent content will vary depending on the other components present.

*Vegetable drying oils*

The first coating composition optionally comprises a vegetable oil. Examples of suitable vegetable oils are drying oil fatty acid compounds such as linseed oil, boiled linseed oil, soybean oil, dehydrated castor oil, cottonseed oil, poppyseed oil, safflower oil, and sunflower oil; partially polymerized drying oils such as partially polymerized linseed oil; oxidized drying oils such as oxidized soybean oil, synthetic drying oils obtained by the esterification of fatty acids with polyhydric alcohols (e.g., glycerol pentaerythritol, mannitol and sorbitol). Preferred vegetable oils are linseed oil, boiled linseed oil, dehydrated castor oil, cottonseed oil and oxidized drying oils such as oxidized soybean oil.

Preferably the total amount of vegetable drying oil present in the first coating composition is 0.05-2.0 wt%, more preferably 0.1-1.5 wt% and still more preferably 0.2-1.0 wt%, based on the total weight of the first coating composition.

*Rheology modifiers*

The first coating composition preferably comprises a rheology modifier. Several rheology modifiers may also be used. Examples of suitable rheology modifiers are cellulosic thickeners, alkali swellable thickeners (ASE), hydrophobically modified alkali-swellable emulsions (HASE), polysaccharide rheology modifiers (such as alginin, guar gum, locust bean gum and xanthan gum), kaolin clay, smectite clay, illite clay, chlorite clay, synthetic clay or organically modified clay (e.g. bentonite). Preferred rheology modifiers are cellulosic thickeners, alkali swellable thickeners (ASE), hydrophobically modified alkali-swellable emulsions (HASE), synthetic clay and organically modified clay (e.g. bentonite).

Preferably the total amount of rheology modifiers present in the first coating composition is 0.05-2.0 wt%, more preferably 0.1-1.5 wt% and still more preferably 0.1-1.0 wt%, based on the total weight of the first coating composition.

*Wetting and Dispersing agents*

The first coating composition preferably comprises a wetting and dispersing agent. Wetting and dispersing agents are added to disperse and stabilize pigments and fillers in the coating composition. Wetting and dispersing agents are often also referred to as surfactants. A wide range of wetting and dispersing agents are commercially available and may be used. Suitable wetting and dispersing agents include conventional anionic, cationic, non-ionic and amphoteric dispersing agents as well as combinations thereof.

Preferably the total amount of wetting and dispersing agents present in the first coating composition is 0.1-3.0 wt%, more preferably 0.2-2.5 wt% and still more preferably 0.3-2.0 wt%, based on the total weight of the first coating composition.

*Other additives*

The first coating composition preferably comprises one or more other additives. Examples of other components that can be added to the first coating composition are foam control agents (e.g. organic siloxanes, polyethers, polyether-modifed silicones, mineral oils and combinations thereof), neutralizing agents, pH adjusters (e.g. ammonia, 2-aminopropanol), adhesion promotors, UV stabilisers, water softeners (e.g. sodium hexametaphosphate), antioxidants, anti-static agents and flame retardant agents.

Optionally the first coating composition comprises UV stabilisers, (e.g. hindered amine light stabilisers). Optionally the first coating composition comprises UV absorbents. Optionally the first coating composition comprises adhesion promotors.

Preferably the total amount of additives present in the first coating composition is 0.05-5.0 wt%, more preferably 0.1-4.0 wt% and still more preferably 0.3-3.5 wt%, based on the total weight of the first coating composition.

*Overall First Coating Composition*

A preferred first coating composition comprises:

(i) 4-30 wt%, preferably 5-25 wt% organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(iii) 0-7.0 wt%, preferably 0.01-7.0 wt% dry film biocide; and
(iv) 10-50 wt% water;

and said first coating composition has a PVC of 60-89 and a Stormer viscosity of 80-120 KU.

A further preferred first coating composition comprises:

(i) 4-30 wt%, preferably 5-25 wt% organic polymer dispersion;
(ii) inorganic filler (a) having a $D_{98}$ of greater than 100 $\mu$m;
(iii) inorganic filler (b) having a $D_{98}$ of 25-250 $\mu$m;
(iv) inorganic filler (c) having a $D_{98}$ of 5-100 $\mu$m;
wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) 0-7.0 wt%, preferably 0.01-7.0 wt% dry film biocide; and
(vi) 10-50 wt% water;

and said first coating composition has a PVC of 60-89 and a Stormer viscosity of 80-120 KU.

A yet further preferred first coating composition comprises:

(i) 4-30 wt%, preferably 5-25 wt% organic polymer dispersion;
(ii) 10-60 wt% inorganic filler (a) having a $D_{98}$ of greater than 100 $\mu$m;
(iii) 2-30 wt% inorganic filler (b) having a $D_{98}$ of 25-250 $\mu$m;
(iv) 0.1-30 wt% inorganic filler (c) having a $D_{98}$ of 5-100 $\mu$m;
wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) 0-7.0 wt%, preferably 0.01-7.0 wt% dry film biocide; and
(vi) 10-50 wt% water;

and said first coating composition has a PVC of 60-89 and a Stormer viscosity of 80-120 KU.

Particularly preferred first coating compositions comprise at least 4 colour pigments, preferably 4-6 colour pigments. The first coating composition achieves hiding.

Preferably the first coating composition is applicable by rolling. More preferably the first coating composition has a Stormer viscosity of 85-115 KU and more preferably 85-110 KU.

Preferably the first coating composition has a PVC of 65-89, more preferably 70-85 and still more preferably 76-82.

Preferably the first coating composition has a solids content of 50-70 vol%, and more preferably 55 to 78 vol%.

Preferably the first coating composition has a solids content of 60-90 wt%, and more preferably 70-85 wt%.

Preferably the first coating composition has a pH of 8.0-10.0 and more preferably 9.0-9.5.

Preferably the first coating composition has a VOC of 0-100 g/L, more preferably 0-60 g/L and still more preferably 0-40 g/L/.

*Second coating composition*

The second coating composition comprises an organic polymer dispersion, inorganic fillers, and water. Optionally the second coating composition comprises a dry film biocide and/or at least 4 colour pigments. Optionally the second coating composition comprises organic solvent, vegetable drying oils, rheology modifier, wetting and dispersing agents and/or additives.

Preferably the second coating composition comprises the same type of organic polymer dispersion as the first coating composition.

Preferably the second coating composition comprises the same type of inorganic fillers as the first coating composition.

Preferably the second coating composition comprises a different amount of water to the first coating composition. Preferably the first coating composition comprises more water (i.e. higher wt% water) than the second coating composition.

*Organic polymer dispersion*

The second coating composition of the present invention comprises an organic polymer dispersion, and preferably an organic copolymer dispersion. As is well known to a person skilled in the art, a dispersion is a composition comprising polymer particles dispersed in a solvent. The dispersed polymer may be any polymer suitable for use as a film-forming polymer in coating compositions. Such polymers are well known in the art. The liquid phase, i.e. solvent of the dispersion, is preferably aqueous. More preferably the liquid phase comprises water, e.g. the liquid phase is at least 95 wt% water. The liquid phase optionally comprises solvents, and additives.

In the second coating composition, the organic polymer dispersion preferably comprises a polymer having a minimum film formation temperature (MFFT) of 0-35 °C, more preferably 10-25 °C, and still more preferably 15-20 °C. This is advantageous because it makes it possible to minimise the amount of solvent needed in the composition, and thereby reduce the VOC of the coating composition.

In the second coating composition, the organic polymer dispersion preferably comprises a polymer comprising monomers selected from (meth)acrylate, acrylamide, vinyl and/or styrenic monomers (e.g. styrene, $\alpha$-methyl styrene, vinyl toluene, vinyl acetate, vinyl esters of versatic acids). More preferably the organic polymer dispersion comprises poly(meth)acrylates, (meth)acrylate copolymers, vinyl-(meth)acrylate copolymers, styrene-(meth)acrylate copolymers, polyvinyl acetate copolymers and copolymers of vinyl esters of versatic acids. Still more preferably the organic polymer dispersion comprises a poly(meth)acrylate dispersion.

The poly(meth)acrylate present in a poly(meth)acrylate dispersion preferably present in the second coating composition may be a homopolymer or a copolymer. Preferably the poly(meth)acrylate is a copolymer. Particularly preferably the poly(meth)acrylate comprises at least two (e.g. 2, 3, 4 or more) different (meth)acrylate monomers.

Preferred poly(meth)acrylate dispersions present in the second coating composition comprise a poly(meth)acrylate polymer comprising at least 50 wt% (meth)acrylate monomers, based on the dry weight of the polymer. Examples of poly(meth)acrylate polymers comprising non-acrylate monomers include poly(meth)acrylate-polyurethanes, poly(meth)acrylate-polyesters and poly(meth)acrylate-silicones/siloxanes. Such polymers typically comprise a poly(meth)acrylate backbone and side chains of polyurethane, polyester or silicone/siloxane. The side chains are typically grafted onto the poly(meth)acrylate backbone. When the poly(meth)acrylate present in the poly(meth)acrylate dispersion comprises non-(meth)acrylate monomers, the other monomers are preferably selected from acrylamide, vinyl and/or styrenic monomers such as styrene, $\alpha$-methyl styrene, vinyl toluene, vinyl acetate, vinyl esters of versatic acids and mixtures thereof. Examples of these polymers are styrene-(meth)acrylate, vinyl-(meth)acrylate, polyvinylacetate-(meth)acrylate.

For the preparation of multi-layered coatings for exterior use, the poly(meth)acrylate dispersion preferably comprises a poly(meth)acrylate polymer comprising at least 60 wt%, more preferably at least 75 wt%, still more preferably at least 90 wt%, and yet more preferably at least 95 wt% (meth)acrylate monomers, based on the dry weight of the polymer. Preferred poly(meth)acrylate polymers comprise 50-100 wt%, more preferably 60-100 wt%, still more preferably 75-100 wt%, yet more preferably 90-100 wt% and especially preferably 95-100 wt% (meth)acrylate monomers, based on the dry weight of the polymer. Particularly preferably, however, poly(meth)acrylate polymers present in the poly(meth)acrylate dispersion comprise 100 wt% (meth)acrylate monomers, i.e. they do not comprise any monomers of another type, based on the dry weight of the polymer.

A preferred second coating composition comprises 5-30 wt%, preferably 6-25 wt%, and still more preferably 8-20 wt% of organic polymer dispersion, based on the total weight of the second coating composition.

*Inorganic fillers*

The second coating composition comprises inorganic fillers (a), and (b), and preferably inorganic filler (c). Inorganic filler (a) has a $D_{98}$ of greater than 100 $\mu$m, inorganic filler (b) has a $D_{98}$ of 25-250 $\mu$m; and, when present, inorganic filler (c) has a $D_{98}$ of 5-100 $\mu$m. The $D_{98}$ of said inorganic filler (a) is greater than the $D_{98}$ of said inorganic filler (b) and the $D_{98}$ of said inorganic filler (b) is greater than the $D_{98}$ of said inorganic filler (c).

In the second coating composition, said inorganic filler (a) preferably has a $D_{98}$ of greater than 200 $\mu$m, more preferably greater than 250 $\mu$m and still more preferably greater than 300 $\mu$m. More preferably said inorganic filler (a) has a $D_{98}$ of 105 to 800 $\mu$m, more preferably 200-700 $\mu$m, still more preferably 250-650 $\mu$m and yet more preferably 300-600 $\mu$m.

In the second coating composition, said inorganic filler (a) preferably has a $D_{50}$ of 50-450 $\mu$m, more preferably 70-400 $\mu$m, still more preferably 90-350 $\mu$m and yet more preferably 100-300 $\mu$m.

The size of inorganic filler (a) is preferably measured by laser diffraction, preferably as described in the examples section herein. However, when $D_{98}$ is greater than about 300 $\mu$m, it has been found that there can be significant error in laser diffraction size measurements. Thus more preferably the size of inorganic filler (a), particularly when it is greater than about 300 $\mu$m, is alternatively or additionally measured by sieves, e.g. as described in the examples herein. Still more preferably the size of inorganic filler (a) is additionally measured by sieves, e.g. according to ASTM C136/C136M-19, using Retsch AS 200 control instrument and Retsch test sieves 45 $\mu$m, 100 $\mu$m, 200 $\mu$m, 300 $\mu$m and 400 $\mu$m. Preferably the test method is as described in the examples herein.

When the size of inorganic filler (a) is measured by sieves, preferably at least one, more preferably at least two, still more preferably at least three and yet more preferably all of the below conditions are satisfied:

On the 300 $\mu$m sieve < 10 wt%, more preferably < 5 wt% particles are retained;
On the 200 $\mu$m sieve 5-50 wt%, more preferably 10-40 wt% particles are retained;
On the 100 $\mu$m sieve 20-60 wt%, more preferably 25-50 wt% particles are retained;
On the 45 $\mu$m sieve 10-40 wt%, more preferably 15-35 wt% particles are retained;
Below 45 $\mu$m sieve <40 wt%, more preferably <35 wt% particles are retained.

Particularly preferably 5-50 wt %, more preferably 10-40 wt %, of the particles are retained by the 200 $\mu$m sieve and 20-60 wt%, more preferably 25-50 wt% of the particles are retained by 100 $\mu$m sieves. Yet more preferably 10-40 % of the particles are retained by the 200 $\mu$m sieve, 25-50 % of the particles are retained by 100 $\mu$m sieves and 15-30 wt% of the particles are retained by the 45 $\mu$m sieve.

Suitable inorganic filler particles for use as inorganic filler (a) exist in different forms, e.g. spherical, lamellar, nodular and irregular.

Representative examples of suitable inorganic filler (a) include calcite (calcium carbonate, $CaCO_3$), dolomite (calcium magnesium carbonate, $CaMg(CO_3)_2$), nepheline syenite, barium sulphate, calcium silicate, magnesium silicate, sodium silicate, silica sand, feldspar, talc, kaolin, wollastonite (calcium metasilicate), wollastonite mixed with barium sulfate, calcium phosphate, magnesium phosphate, perlite and other porous fillers having a low coefficient of thermal expansion (CTE), pumice, alumina, sodium metasilicate, magnesium metasilicate, sintered glass frit, quartz glass powder, glass rods, glass whiskers, and chopped glass.

Preferred inorganic fillers (a) are selected from calcite (calcium carbonate, $CaCO_3$) and dolomite (calcium magnesium carbonate, $CaMg(CO_3)_2$). Representative examples of suitable sources of calcite (calcium carbonate) include marble and limestone. A representative example of a suitable source of dolomite (calcium magnesium carbonate) is dolomite marble. Preferably inorganic filler (a) is calcite marble or dolomite marble.

Optionally the inorganic filler (a) is coated or surface treated. The coating or surface treatment may, for example, decrease the surface tension or improve the compatibility with the organic binders present in the coating composition.

A preferred second coating composition comprises 30-60 wt%, preferably 35-55 wt%, and still more preferably 40-50 wt% of inorganic filler (a), based on the total weight of the second coating composition.

In the second coating composition, said inorganic filler (b) preferably has a $D_{98}$ of 25-250 $\mu$m, more preferably 50-200 $\mu$m, still more preferably 70-150 $\mu$m and yet more preferably 90-125 $\mu$m.

In the second coating composition, said inorganic filler (b) preferably has a $D_{50}$ of 5-150 $\mu$m, more preferably 7-100 $\mu$m, still more preferably 10-50 $\mu$m and yet more preferably 13-20 $\mu$m.

The size of inorganic filler (b) is preferably measured by laser diffraction, preferably as described in the examples section herein.

Suitable inorganic filler particles for use as inorganic filler (b) exist in different forms, e.g. spherical, lamellar, nodular and irregular.

Representative examples of suitable inorganic filler (b) include calcite (calcium carbonate, $CaCO_3$), dolomite (calcium magnesium carbonate, $CaMg(CO_3)_2$), nepheline syenite, barium sulphate, calcium silicate, magnesium silicate, sodium silicate, silica sand, feldspar, talc, kaolin, wollastonite (calcium metasilicate), wollastonite mixed with barium sulfate, calcium phosphate, magnesium phosphate, perlite and other porous fillers having a low coefficient of thermal expansion (CTE), pumice, alumina, sodium metasilicate, magnesium metasilicate, sintered glass frit, quartz glass powder, glass rods, glass whiskers, and chopped glass.

Preferred inorganic fillers (b) are selected from calcite (calcium carbonate, $CaCO_3$), dolomite (calcium magnesium carbonate, $CaMg(CO_3)_2$), nepheline syenite, feldspar and talc. Representative examples of suitable sources of calcite (calcium carbonate) include marble, limestone and chalk. A representative example of a suitable source of dolomite (calcium magnesium carbonate) is dolomite marble. Preferably inorganic filler (b) is calcite marble or limestone or dolomite marble.

Optionally the inorganic filler (b) is coated or surface treated. The coating or surface treatment may, for example, decrease the surface tension or improve the compatibility with the organic binders present in the coating composition.

A preferred second coating composition comprises 5.0-30 wt%, preferably 7.0-25 wt%, and still more preferably 8.0-20 wt% of inorganic filler (b), based on the total weight of the second coating composition.

In the second coating composition, said inorganic filler (c) is preferably present. In the second coating composition, said inorganic filler (c) preferably has a $D_{98}$ of 10-70 $\mu$m, more preferably 20-60 $\mu$m and still more preferably 35-55 $\mu$m.

In the second coating composition, said inorganic filler (c) preferably has a $D_{50}$ of 2-50 $\mu$m, more preferably 4-35 $\mu$m, still more preferably 6-25 $\mu$m and yet more preferably 8-14 $\mu$m.

The size of inorganic filler (c) is preferably measured by laser diffraction, preferably as described in the examples section herein.

Suitable inorganic filler particles for use as inorganic filler (c) exist in different forms, e.g. spherical, lamellar, nodular and irregular.

Representative examples of suitable inorganic filler (c) include calcite (calcium carbonate, $CaCO_3$), dolomite (calcium magnesium carbonate, $CaMg(CO_3)_2$), nepheline syenite, barium sulphate, calcium silicate, magnesium silicate, sodium silicate, silica sand, feldspar, talc, kaolin, wollastonite (calcium metasilicate), wollastonite mixed with barium sulfate, calcium phosphate, magnesium phosphate, perlite and other porous fillers having a low coefficient of thermal expansion (CTE), pumice, alumina, sodium metasilicate, magnesium metasilicate, sintered glass frit, quartz glass powder, glass rods, glass whiskers, and chopped glass.

Preferred inorganic fillers (c) are selected from calcite (calcium carbonate, $CaCO_3$), dolomite (calcium magnesium carbonate, $CaMg(CO_3)_2$), nepheline syenite, feldspar and talc. Representative examples of suitable sources of calcite (calcium carbonate) include marble, limestone and chalk. A representative example of a suitable source of dolomite (calcium magnesium carbonate) is dolomite marble. Preferably inorganic filler (c) is calcite marble or limestone or dolomite marble.

A preferred second coating composition comprises 0.1-30 wt%, preferably 0.5-20 wt%, and still more preferably 1-10 wt% of inorganic filler (c), based on the total weight of the second coating composition.

*Water*

The water present in the second coating composition derives from the organic polymer dispersion, which typically has an aqueous continuous phase, other components present in the composition which are supplied in water and water which is added to the overall mixture. Optionally, water may be added after the first coating composition is tinted and/or immediately prior to application. The water added to the overall mixture forming the composition is preferably desalinated water, or soft or pure tap water. Preferably the pH of the water is 6.0-8.0.

Preferred second coating compositions of the invention comprise 5-30 wt%, more preferably 7-27 wt%, still more preferably 8-26 wt% and yet more preferably 10-25 wt% water, based on the total weight of the second coating composition.

Preferred second coating compositions of the invention comprise 20-80 vol%, more preferably 10-55 vol%, more preferably 15-45 vol%, still more preferably 17-40 vol%, and yet more preferably 20-40 vol% water, based on the total volume of the second coating composition.

*Biocides*

The second coating composition preferably comprises a biocide. The biocide may be inorganic, organometallic or organic. Preferred biocides present in the compositions of the invention are organic agents. Suitable biocides are commercially available.

The second coating composition optionally comprises in can biocide and/or dry film biocide. Mixtures of different biocides may also be employed. Some preferred second coating compositions of the present invention comprise at least one dry film biocide.

Representative examples of suitable in can biocides that may be present in the second coating composition include:

Isothiazolines: Reaction mass of 5-chloro-2-methyl-4-isothiazolin-3-one and 2-methyl-2H-isothiazol-3-one (3:1) (CIT/MIT) (0.0001-0.01% (1-100 ppm)); 5-chloro-2-methyl-4-isothiazolin-3-one (CIT) (0.0001-0.01% (1-100 ppm)); 2-Methyl-4-isotiazolin-3-one (MIT)(0.0001-0.05 (1-500 ppm)); 2-Methyl-1,2-Benzisothiazol-3(2H)-one (MBIT)(0.0001-0.05 (1-500 ppm)); 1,2-Benzisothiazolin-3-one (BIT)(0.0001-0.05 (1-500 ppm)); 2-Octyl-2H-isothiazol-3-one (OIT)(0.0001-0.5% (1-5000 ppm)); 2-butyl-benzo[d]isothiazol-3-one (BBIT)(0.0001-0.5% (1-5000 ppm));
Amides/Ureas: Benzamide, 2,2'-dithiobis (DTBMA)(0.0001-0.05% (1-500 ppm)), 2,2-dibromo-2-cyanoacetamide (DBNPA)(0.0001-0.05% (1-500 ppm));
Pyrithiones: Zinc pyrithione (ZnPT)(0.0001-0.05% (1-500 ppm)); Sodium pyrithione (NaPT)(0.0001-0.05% (1-500 ppm));
Organohalogens: 2-Bromo-2-nitro-1,3-propanediol (Bronopol)(0.001-0.05% (1-500 ppm);
Carbamates: 3-iodo-2-propynylbutylcarbamate (IPBC)(0.01-0.5% (100-5000 ppm));
Silver chemistry: Reaction mass of titanium dioxide and silver chloride (0.0001-0.5% (1-5000 ppm)); and
Formaldehyde donor/CH$_2$O adducts: N,N-Methylenebismorpholine (MBM)(0.0001-0.5% (1-5000 ppm)); (ethylenedioxy)dimethanol (EDDM) (0.0001-0.5% (1-5000 ppm)); $\alpha$, $\alpha'$, $\alpha''$-trimethyl-1,3,5-triazine-1,3,5(2H,4H,6H)-triethanol (HPT); 3,3'-methylenebis[5-methyloxazolidine] (Oxazolidin/MBO) (0.0001-0.5% (1-5000 ppm)); Sodium N-(hydroxymethyl)glycinate; Tetrahydro-1,3,4,6-tetrakis(hydroxymethyl)imidazo[4,5-d]imidazole-2,5(1H,3H)-dione (TMAD)(0.0001-0.5% (1-5000 ppm)); Tetrakis(hydroxymethyl)phosphonium sulphate(2:1) (THPS) ( 0.0001-0.5% (1-5000 ppm)); Methenamine 3-chloroallylochloride (CTAC)(0.0001-0.5% (1-5000 ppm)); 2,2',2"-(hexahydro-1,3,5-triazine-1,3,5-triyl)triethanol (HHT)( 0.0001-0.5% (1-5000 ppm)); 1,3-bis(hydroxymethyl)-5,5-dimethylimidazolidine-2,4-dione (DMDMH)(0.0001-0.5% (1-5000 ppm)); 7a-ethyldihydro-1H,3H,5H-oxazolo[3,4-c]oxazole (EDHO)(0.0001-0.5% (1-5000 ppm)); cis-1-(3-chloroallyl)-3,5,7-triaza-1-azoniaadamantanechloride (cis CTAC)(0.0001-0.5% (1-5000 ppm)); (benzyloxy)methanol(0.0001-0.5% (1-5000 ppm)).

Representative examples of suitable dry film biocides that may be present in the second coating compositions include:

Isothiazolines: 4,5-Dichlor-2-n-octyl-4-isotiazolin-3-one (DCOIT)(0.05-0.5% (500-5000 ppm); 2-Octyl-2H-isothiazol-3-one (OIT)(0.1-0.4% (1000-4000 ppm)); 2-butyl-benzo[d]isothiazol-3-one (BBIT)(0.0001-0.5% (1-5000 ppm)); 2-thiazol-4-yl-1H-benzoimidazole (Thiabendazole)(0.01-0.5% (100-5000 ppm));
Azoles: Methyl (E)-2-{2-[6-(2-cyanophenoxy)pyrimidin-4-yloxy]phenyl}-3-methoxyacrylate (Azoxystrobin)(0.01-0.5% (100-5000 ppm)); 1-[[2-(2,4-dichlorophenyl)-4-propyl-1,3-dioxolan-2-yl]methyl]-1H-1,2,4-triazole (Propiconazole)(0.01-0.5% (100-5000 ppm)); 1-(4-chlorophenyl)-4,4-dimethyl-3-(1,2,4-triazol-1-ylmethyl)pentan-3-ol (Tebuconazole)(0.01-0.5% (100-5000 ppm));
Amides/Ureas: 3-(3,4-dichlorophenyl)-1,1-dimethylurea (Diuron)(0.1-5.0% (1000-50,000 ppm)); 3-(4-Isopropylphenyl)-1,1-dimethylurea (Isoproturon)(0.01-5.0% (100-50,000 ppm))
Pyrithiones: Zinc pyrithione (ZnPT)(0.0001-0.05% (1-500 ppm)); Sodium pyrithione (NaPT)(0.0001-0.05% (1-500 ppm));
Organohalogens: 4-(2,2-difluoro-1,3-benzodioxol-4-yl)-1H-pyrrole-3-carbonitrile (Fludioxonil)( 0.01-0.5% (100-5000 ppm)); Dichloro-N-[(dimethylamino)sulphonyl] fluoro-N-(ptolyl)methanesulphenamide (Tolylfluanid)( 0.01-0.5% (100-5000 ppm));
Carbamates: 3-iodo-2-propynylbutylcarbamate (IPBC)( 0.05-0.5% (500-5000 ppm)); Methyl 2-benzimidazoie carbamate (Carbendazim)( 0.01-0.5% (100-5000 ppm))
Silver chemistry: Reaction mass of titanium dioxide and silver chloride (0.0001-0.5% (1-5000 ppm)); Silver copper zeolite (0.0001-0.5% (1-5000 ppm)); Silver nitrate (0.0001-0.5% (1-5000 ppm)); Silver phosphate glass (0.0001-0.5% (1-5000 ppm)); Silver sodium hydrogen zirconium phosphate (0.0001-0.5% (1-5000 ppm)); Silver zeolite (0.0001-0.5% (1-5000 ppm)); Silver zinc zeolite (0.0001-0.5% (1-5000 ppm)); and
Triazines: (4E)-4-(Ethylimino)-N-(2-methyl-2-propanyl)-6-(methylsulfanyl)-1,4-dihydro-1,3,5-triazin-2-amine (Terbutryn)( 0.1-5.0% (1000-50,000 ppm)).

Preferably the dry film biocides are selected from diuron, terbutryn, carbendazim, zinc pyrithione, 2-octyl-2H-isothiazol-3-one (OIT), 4,5-dichlor-2-n-octyl-4-isotiazolin-3-one (DCOIT) and 3-iodo-2-propynylbutylcarbamate (IPBC).

Preferably the total amount of biocide (in can and dry film biocides) present in the second coating compositions is 0.01-7.0 wt%, more preferably 0.05-5.0 wt% and still more preferably 0.1-4.0 wt%, based on the total weight of the second coating composition. It should be understood that the optimal amount of biocide varies depending on which type and/or combination of biocide is employed. Preferably the amount of dry film biocide present in the second coating compositions is 0.01-6.5 wt%, more preferably 0.05-4.5 wt% and still more preferably 0.1-3.5wt%, based on the total weight of the second coating composition.

*Colour pigments*

Optionally the second coating composition comprises at least 2 colour pigments, more preferably at least 3 colour pigments, and more preferably at least 4 colour pigments. Preferably the second coating composition comprises 2-8 colour pigments, more preferably 3-6 colour pigments and still more preferably 4-6 colour pigments.

Optionally the second coating composition comprises $TiO_2$ as a colour pigment. $TiO_2$ is preferred in second coating compositions which are relatively light in colour. Preferably $TiO_2$ is incorporated into the second coating composition during its general preparation.

Preferably the other colour pigments (i.e. those other than TiO2) are incorporated into the second coating composition in a post addition step, more preferably with a multicolour tinting system. This is highly advantageous as it means the second coating composition can be coloured, as desired, shortly before purchase.

Representative examples of suitable colour pigments include inorganic pigments, organic pigments or a mixture thereof.

Representative examples of suitable inorganic pigments include metal oxides (e.g. iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. A huge range of suitable pigments are commercially available.

Non-infrared-absorptive pigments may also be used.

Preferably the total amount of $TiO_2$ present in the second coating compositions is 0-20 wt%, more preferably 0-15 wt% and still more preferably 0-12 wt%, based on the total weight of the second coating composition. Some second coating compositions, e.g. those of relatively lighter colour, comprise 1-20 wt%, more preferably 5-15 wt% and still more preferably 6-12 wt% of $TiO_2$, based on the total weight of the second coating composition.

The amount of colour pigments vary depending on chosen colour. The total amount of colour pigments present in the second coating compositions may be 0.01-10.0 wt%, preferably 0.05-7.0 wt% and more preferably 0.1-6.0 wt%, based on the total weight of the second coating composition.

*Organic solvent*

The second coating composition optionally comprises an organic solvent. The solvent present may derive from components present in the composition that are provided in solvents and/or from solvent added into the composition. The solvent is preferably volatile. Suitable solvents present in the second coating composition of the invention are commercially available.

Examples of suitable organic solvents and thinners are monopropylene glycol, ethylene glycol methyl ether acetate, diethylene glycol n-butyl ether acetate, propylene glycol methyl ether acetate; ethers such as dipropylene glycol butyl ether, dipropylene glycol propyl ether, propylene glycol propyl ether, propylene glycol butyl ether, ethylene glycol monobutyl ether, diethylene glycol monobutyl ether, ethylene glycol dimethyl ether, diethylene glycol dimethyl ether, dibutyl ether, dioxane, tetrahydrofuran; alcohols such as propylene glycol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners.

If an organic solvent is present in the second coating composition of the invention, the organic solvent is preferably selected from 2,2,4-trimethyl-1,3-pentanediol monoisobutyrate (texanol), diethylene glycol monobutyl ether, monopropylene glycol, dipropylene glycol butyl ether and mixtures thereof.

The amount of organic solvent present in the second coating composition is preferably as low as possible as this minimize the VOC content. Preferably organic solvent is present in the second coating composition in an amount of 0-5.0 wt%, more preferably 0-4.0 wt% and still more preferably 0.5-3.0 wt% based on the total weight of the second coating composition. The skilled person will appreciate that the organic solvent content will vary depending on the other components present.

*Vegetable drying oils*

The second coating composition optionally comprises a vegetable oil. Examples of suitable vegetable oils are drying oil fatty acid compounds such as linseed oil, boiled linseed oil, soybean oil, dehydrated castor oil, cottonseed oil, poppyseed oil, safflower oil, and sunflower oil; partially polymerized drying oils such as partially polymerized linseed oil; oxidized drying oils such as oxidized soybean oil, synthetic drying oils obtained by the esterification of fatty acids with polyhydric alcohols (e.g., glycerol pentaerythritol, mannitol and sorbitol). Preferred vegetable oils are linseed oil, boiled linseed oil, dehydrated castor oil, cottonseed oil and oxidized drying oils such as oxidized soybean oil.

Preferably the total amount of vegetable drying oil present in the second coating composition is 0.05-2.0 wt%, more preferably 0.1-1.5 wt% and still more preferably 0.2-1.0 wt%, based on the total weight of the second coating composition.

*Rheology modifiers*

The second coating composition preferably comprises a rheology modifier. Several rheology modifiers may also be used. Examples of suitable rheology modifiers are cellulosic thickeners, alkali swellable thickeners (ASE), hydrophobically modified alkali-swellable emulsions (HASE), polysaccharide rheology modifiers (such as alginin, guar gum, locust bean gum and xanthan gum), kaolin clay, smectite clay, illite clay, chlorite clay, synthetic clay or organically modified clay (e.g. bentonite). Preferred rheology modifiers are cellulosic thickeners, alkali swellable thickeners (ASE), hydrophobically modified alkali-swellable emulsions (HASE), synthetic clay and organically modified clay (e.g. bentonite).

Preferably the total amount of rheology modifiers present in the second coating composition is 0.05-2.0 wt%, more preferably 0.1-1.5 wt% and still more preferably 0.1-1.0 wt%, based on the total weight of the second coating composition.

*Wetting and Dispersing agents*

The second coating composition preferably comprises a wetting and dispersing agent. Wetting and dispersing agents are added to disperse and stabilize pigments and fillers in the coating composition. Wetting and dispersing agents are often also referred to as surfactants. A wide range of wetting and dispersing agents are commercially available and may be used. Suitable wetting and dispersing agents include conventional anionic, cationic, non-ionic and amphoteric dispersing agents as well as combinations thereof.

Preferably the total amount of wetting and dispersing agents present in the second coating compositions is 0.1-3.0 wt%, more preferably 0.2-2.5 wt% and still more preferably 0.3-2.0 wt%, based on the total weight of the second coating composition.

*Other additives*

The second coating composition preferably comprises one or more other additives. Examples of other components that can be added to the first coating composition are foam control agents (e.g. organic siloxanes, polyethers, polyether-modifed silicones, mineral oils and combinations thereof), neutralizing agents, pH adjusters (e.g. ammonia, 2-aminopropanol), adhesion promotors, UV stabilisers, water softeners (e.g. sodium hexametaphosphate), antioxidants, anti-static agents and flame retardant agents.

Optionally the second coating composition comprises UV stabilisers, (e.g. hindered amine light stabilisers). Optionally the second coating composition comprises UV absorbents. Optionally the second coating composition comprises adhesion promotors.

Preferably the total amount of additives present in the second coating compositions is 0.05-5.0 wt%, more preferably 0.1-4.0 wt% and still more preferably 0.3-3.5 wt%, based on the total weight of the second coating composition.

*Overall Second Coating Composition*

A preferred second coating composition comprises:

(i) 5-30 wt%, preferably 6-25 wt% organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) 0-7.0 wt%, preferably 0.01-7.0 wt% dry film biocide; and
(vi) 5-30 wt% water;

and said second coating composition has a PVC of 60-89.

A further preferred second coating composition comprises:

(i) 5-30 wt%, preferably 6-25 wt% organic polymer dispersion;
(ii) 30-60 wt% inorganic filler (a) having a $D_{98}$ of greater than 100 $\mu$m;
(iii) 5-30 wt% inorganic filler (b) having a $D_{98}$ of 25-250 $\mu$m;
(iv) 0.1-30 wt% inorganic filler (c) having a $D_{98}$ of 5-100 $\mu$m;
wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) 0-7.0 wt%, preferably 0.01-7.0 wt% dry film biocide; and
(vi) 5-30 wt% water;

and said second coating composition has a PVC of 60-89.

Particularly preferred second coating compositions comprise at least 4 colour pigments, preferably 4-8 colour pigments.

Preferably the second coating composition is applicable by hopper gun.

Preferably the second coating composition has a PVC of 65-89, more preferably 70-85 and still more preferably 76-82.

Preferably the second coating composition has a solids content of 50-70 vol%, and more preferably 55 to 78 vol%.

Preferably the second coating composition has a solids content of 60-90 wt%, and more preferably 70-85 wt%.

Preferably the second coating composition has a pH of 8.0-10.0 and more preferably 9.0-9.5.

Preferably the second coating composition has a VOC of 0-100 g/L, more preferably 0-60 g/L and still more preferably 0-40 g/L/.

*Coating on a surface*

The present invention also relates to a multi-layered coating on a surface, preferably on a surface of a mineral substrate, wherein said coating is formed from a coating system as hereinbefore defined. Preferably the multi-layered coating comprises a first coating layer and a second coating layer, wherein said first coating layer is formed from a first coating composition as hereinbefore defined, and said second coating layer is formed from a second coating composition as hereinbefore defined.

Optionally a thin clear coat can be applied on top of the second coating composition to enhance the dirt pick up resistance further.

Preferably the first coating layer is applied directly on a substrate (i.e. preferably no primer is required). Preferably the second coating layer is applied to said first coating layer. Optionally further (e.g. one, two, or three) layers of second coating composition may be applied to the first second coating layer. Preferably a second coating layer (either the layer on top of the first coating layer, or a further second coating layer) is the top coat or top coating layer (i.e. no separate top coat layer is needed). Preferably the multi-layer coating consists of two layers, the first layer formed from a first coating composition as hereinbefore defined and the second layer formed form a second coating composition as hereinbefore defined. The coating compositions, once dried, forms a multi-layered, preferably two-layered, coating or film. The coating or film therefore comprises the compositions as hereinbefore described but with little, or no, water content or solvent.

In a preferred multi-layered coating the first coating layer has a wet film thickness of 50-400, more preferably 100-300 and still more preferably 200-280 $\mu$m.

In a preferred multi-layered coating the first coating layer has a dry film thickness of 30-220, more preferably 55-170 and still more preferably 115-160 $\mu$m.

In a preferred multi-layered coating the second coating layer has a wet film thickness of 200-1600, more preferably 350-1200 and still more preferably 500-1000 $\mu$m.

In a preferred multi-layered coating the second coating layer has a dry film thickness of 120-1000, more preferably 210-700 and still more preferably 290-600 $\mu$m.

In a preferred multi-layered coating the total coating layer has a wet film thickness of 250-3600, more preferably 450-2700 and still more preferably 700-2300 $\mu$m.

In a preferred multi-layered coating the total coating layer has a dry film thickness of 150-2200, more preferably 270-1600 and still more preferably 400-1400 $\mu$m.

Suitable surfaces that may be coated with the coating system herein described include minerals, wood, wooden based materials (e.g. MDF, chipboard), metal, stone, or foam. Preferably the surface is a mineral substrate, preferably selected from masonry, block work (e.g. bricks, cementitious hollow blocks, autoclaved aereated (AAC) concrete blocks), concrete, glass reinforced concrete, rendered surfaces (e.g. putty, stuccos), plaster (e.g. cement plaster, gypsum plaster, lime plasters, plaster of paris, plaster with organic binder) and dry wall (e.g. gypsum board, cement fibre boards).

Representative examples of surfaces or articles that may be coated with the coating system described herein include interior articles such as architectural structures (e.g. buildings, walls, columns, window frames, ceilings and soffits). The coating system of the present invention is particularly suited for application to surfaces that are regularly exposed to an outdoor environment. Preferably, therefore, the coating system is for preparation of an exterior coating. Representative examples of surfaces or articles that may be coated with the coating system described herein include exterior articles such as architectural structures. Examples of architectural structures include buildings, walls, boundary walls, facades, columns, window frames, ceilings and soffits.

Preferably any defects in the substrate like surface undulations, cracks and pin holes should be rectified/filled before applying the first coating composition.

The coating compositions may be applied to a whole or part of any surface or article. Application of the coating compositions may be accomplished by any convenient means, e.g. via painting with a brush or roller, or spraying with a hopper gun onto the surface or article. The method of preparing a multi-layered coating on a surface, therefore comprises:

(i) applying a first coating composition as hereinbefore defined;
(ii) drying said first coating composition to form a first coating layer;
(iii) applying a second coating composition as hereinbefore defined; and
(iv) drying said second coating composition to form a second coating layer.

Preferably the first coating composition as hereinbefore defined is applied using a roller. Preferably the first coating layer achieves hiding.

Preferably the second coating composition hereinbefore defined is applied by hopper gun.

The method of preparing a multi-layer coating optionally comprises a first step of preparing a first coating composition as herein described and/or preparing a second coating composition as herein described. Optionally the first coating composition may be prepared by adding water to the second coating composition.

*Manufacture and containers*

The present invention also relates to a method of preparing the coating system as hereinbefore described wherein each of the coating compositions present therein are prepared. The coating compositions are prepared by mixing the necessary ingredients. Any conventional production method may be used.

The present invention relates to a method of preparing a coating system as hereinbefore described, comprising:

(i) preparing a first coating composition by mixing an organic polymer dispersion, at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler; and 10-50 wt% water; and

(ii) preparing a second coating composition by mixing an organic polymer dispersion, an inorganic filler (a) having a $D_{98}$ of greater than 100 $\mu$m, an inorganic filler (b) having a $D_{98}$ of 25-250 $\mu$m, and preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c) and 5-30 wt% water.

The first and second coating compositions may be prepared in a suitable concentration for use, e.g. in roller or hopper gun application. Alternatively, one or both of the coating compositions may be a concentrate. In this case, further solvent, typically water, is added to the coating composition to form the final coating composition. After mixing, and optionally after addition of solvent, e.g. water, the coating composition is preferably filled into a container. Suitable containers include cans, drums and tanks.

The first coating composition is preferably supplied as a concentrate. Optionally the concentrate is the second coating composition as herein defined. Preferably the first coating composition is diluted with water before use. Preferably water is added in an amount of 20-50 vol%, more preferably 30-40 vol% shortly before application.

The second coating composition is preferably supplied as a ready-mixed or ready to use form. Optionally water may be added shortly before application.

Preferably each of the first and second coating compositions are tinted with pigments prior to application. Optionally the first and second coating compositions are tinted shortly before sale, e.g. in a shop. Thus the present invention also provides a tintable base coating composition to which tinters are added. As such, the present invention also relates to a base coating composition comprising:

(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(iii) optionally $TiO_2$;
(iv) less than 0.5 wt% colour pigment other than $TiO_2$; and
(v) 5-30 wt% water,

and said coating composition has a PVC of 60-89.

In preferred base coating compositions the organic polymer dispersion is as described above for the first and second coating compositions in the coating system.

In preferred base coating compositions the inorganic fillers are as described for the second coating composition of the coating system. Preferably the base coating composition comprises inorganic fillers (a), (b) and (c).

In preferred base coating compositions the water is as described in relation to the second coating composition of the coating system.

Other preferred fall back positions for the base coating composition are the same as those for the second coating composition of the coating system described above.

Preferred base coating compositions comprise less than 0.2 wt%, more preferably less than 0.1 wt% and still more preferably 0 wt% colour pigment other than $TiO_2$. This ensure that the base coating composition is tintable.

The present invention also relates to each of the coating compositions per se. Thus the present invention also provides a coating composition comprising:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m; wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) preferably at least four colour pigments;
(vi) preferably a dry film biocide; and
(vii) water, preferably 10-50 wt% or 5-30 wt% water

and said coating composition has a PVC of 60-89.

A preferred first coating composition per se comprises:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m; wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
(v) water, preferably 10-50 wt% water

and said coating composition has a PVC of 60-89 and preferably a Stormer viscosity of 80-120 KU.

Another preferred first coating composition per se comprises:

(i) an organic polymer dispersion;

(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);

(iii) a dry film biocide; and

(iv) 10-50 wt% water,

and said coating composition has a PVC of 60-89 and a Stormer viscosity of 80-120 KU.

Other preferred fall back positions for the first coating composition are the same as those for the first coating composition of the coating system described above.

A preferred first coating composition per se comprises:

(i) an organic polymer dispersion;

(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);

(iii) at least four colour pigments; and

(iv) 10-50 wt% water,

and said coating composition has a PVC of 60-89 and a Stormer viscosity of 80-120 KU.

In preferred first coating compositions the organic polymer dispersion is as described above for the first coating compositions in the coating system.

In preferred first coating compositions the inorganic fillers are as described for the first coating composition of the coating system. Preferably the first coating composition comprises inorganic fillers (a), (b) and (c).

In preferred first coating compositions the water is as described in relation to the first coating composition of the coating system.

Another preferred second coating composition per se comprises:

(i) an organic polymer dispersion;

(ii) an inorganic filler (a) having a $D_{98}$ of greater than 100 $\mu$m;

(iii) an inorganic filler (b) having a $D_{98}$ of 25-250 $\mu$m;

(iv) an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);

(v) a dry film biocide; and

(vi) water, preferably 1-30 wt% water

and said coating composition has a PVC of 60-89.

A preferred second coating composition per se comprises:

(i) an organic polymer dispersion;

(ii) an inorganic filler (a) having a $D_{98}$ of greater than 100 $\mu$m;

(iii) an inorganic filler (b) having a $D_{98}$ of 25-250 $\mu$m;

(iv) an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);

(v) at least four colour pigments; and

(vi) water, preferably 1-30 wt% water

and said coating composition has a PVC of 60-89.

In preferred second coating compositions the organic polymer dispersion is as described above for the second coating compositions in the coating system.

In preferred second coating compositions the inorganic fillers are as described for the second coating composition of the coating system.

In preferred second coating compositions the water is as described in relation to the second coating composition of the coating system.

Other preferred fall back positions for the second coating composition are the same as those for the second coating composition of the coating system described above.

EXAMPLES

**Materials**

The polymers and compounds used in the examples were all commercially available. The poly(meth)acrylate dispersion (copolymer containing >95 wt% (meth)acrylate monomers (no styrene monomers)) used in the examples had a solid content of 50.0 wt% (in water), pH 9.0, MFFT = 18°C and specific gravity 1.07 $g/cm^3$ (1.13 $g/cm^3$ for dry polymer). The particle size of the inorganic fillers used in the examples is provided in Tables 1 and 2 below.

Table 1. Size of inorganic fillers determined with laser diffraction

| Description | Inorganic filler | D50 ($\mu$m) | D98 ($\mu$m) |
|---|---|---|---|
| Calcite marble | (a) - 1 | 100-150 | 350-400 |
| Dolomite marble | (a) - 2 | 210-260 | 470-580 |
| Calcite marble | (b) - 1 | 36 | 186 |
| Calcite marble | (b) - 2 | 20 | 137 |
| Limestone | (b) - 3 | 15 | 250 |
| Calcite marble | (b) - 4 | 15 | 51 |
| Calcite marble | (c) - 1 | 11 | 43 |
| Limestone | (c) - 2 | 5.4 | 25 |
| Limestone | (c) - 3 | 5 | 16 |
| Calcite marble | (c) - 4 | 6 | 22 |

Table 2. Size of inorganic fillers determined with sieves method

| Description | Inorganic filler | % retained | | | | | |
|---|---|---|---|---|---|---|---|
| | | <45 $\mu$m | 45 $\mu$m | 100 $\mu$m | 200 $\mu$m | 300 $\mu$m | 400 $\mu$m |
| Calcite marble | (a) - 1 | 25-30 | 25-30 | 30-35 | 10-15 | 0 | 0 |
| Dolomite marble | (a) - 2 | <5 | 20-25 | 40-45 | 30-35 | <5 | 0 |

**General procedure for the preparation of coating compositions**

The components of the coating compositions were mixed in the proportions set out in Tables 3, 4, 5 and 9 below, wherein amounts are given in wt% (unless otherwise specified). A number of comparative examples were also prepared.

The coating compositions were prepared using a single shaft dissolver in 25-30 kg batches, using a 16 L mixing vessel. Water was added first. Next, half the total quantity of the poly(meth)acrylate dispersion, half the total quantity of foam control agent, half the total quantity of in-can biocides, 3 quarters of the total Wetting and Dispersing agents mixed with an equal part of water, and half the total quantity of Ammonia (25wt% in water) were added consecutively. The ingredients were all properly mixed at low stirring speed.

The $TiO_2$, if present, and fillers (b) and (c) were added and mixed for 10 minutes, under normal speed until no lumps were present, followed by filler (a), which was mixed for 5 minutes under normal speed to a smooth grind. In the let-down, the remainder of poly(meth)acrylate dispersion, foam control agent, and in-can biocides were added to the mill-base, followed by 2,2,4-Trimethyl-1,3-pentanediol monoisobutyrate (Texanol). The remainder of Wetting and Dispersing agents were mixed with an equal part of water, and added to the mill-base, and mixed for 5 minutes. Afterwards, Boiled Linseed oil was added, then the Thickeners mixed with water in a ratio of 1:5 was poured slowly into the mill-base, while stirring at normal speed and mixed for 5 minutes. The remaining quantity of Ammonia (25wt% in water) and foam control agent were added, and the batch was mixed under normal to high speed for 5 minutes, or until all lumps disappeared. Last, the Monopropylene glycol was added and the whole mill-base mixed for 10 minutes until a homogeneous paste was obtained.

Examples A1-A8 and comparative examples CA1-CA3 were diluted with water directly before application and testing. The amount of water as specified in the Tables were added and the coating compositions were mixed manually.

**Test Methods**

**• Determination of particle size of inorganic filler using Laser diffraction ($D_{98}$ and $D_{50}$)**

$D_{98}$ and $D_{50}$ were determined according to ISO 13320:2020 by using a Mastersizer 3000, with a Hydro G dispersion unit with water (23°C) as dispersing agent.

Samples were collected from thoroughly mixed containers using a spoon. Samples were manually pre-dispersed in a small beaker by using a pipette before being added to the Hydro G until 5-15% obscuration was reached. During measurement 20% ultrasound was applied continuously and stirrer/pump speed was set to 2400 rpm. The samples were analyzed by manual mode and measurement duration set to 10 seconds. Consecutive measurements were made until stable results were achieved. The results were analyzed by applying the following additional settings: Non-spherical particle mode, refractive index = 1.656, absorption index = 0.01 and analysis model general purpose (emulated MS2000).

The Mastersizer 3000 instrument is annually calibrated with latex beads by a Malvern representative. A reference material is regularly measured to ensure that the calibration is still valid.

**• Determination of particle size of inorganic filler with sieves method**

The particle size was determined according to ASTM C136/C136M-19 by using Retsch AS 200 control instrument and Retsch test sieves: 45 μm, 100 μm, 200 μm, 300 μm and 400 μm. The sample size tested was 100 g and the instrument was set at amplitude 60 and a shaking time of 3 minutes.

**• Determination of paint consistency using Stormer-type viscometer**

The consistency of the coating compositions was determined according to ASTM D562-10(2014) Method B using a digital Stormer-type viscometer. The measurement was done on samples in a 500 mL container at 23°C.

**• Determination of Application properties (roller) and Hiding (first coating layer)**

The diluted and manually mixed coating compositions (A1-A7 and CA1-CA3) were applied using a 9"/23 cm Medium Pile (10 mm) Blue Polyester emulsion paint roller directly on outdoor cementitious substrate in vertical strokes. Due to the rough surface of the substrate, a theoretical film thickness was calculated based on the volume of paint used for a specific area. A wet film thickness (WFT) of around 230 μm was applied which corresponds to a dry film thickness (DFT) of 130 μm. After the paint had properly dried (4-6 hours) the coating was evaluated visually from different angles. The coating was evaluated for the ease of application, wet hiding, dry hiding, overlap, roller marks, sagging and cracking on a rating scale form 1-5 where 5 is excellent and 1 is worst. To pass the test a rating of at least 3 is needed.

**• Determination of Adhesion (first coating layer)**

The diluted and manually mixed coating compositions (A1-A7 and CA1-CA3) were applied using a 9"/23 cm Medium Pile (10 mm) Blue Polyester emulsion paint roller directly on outdoor cementitious substrate in vertical strokes. Due to the rough surface of the substrate, a theoretical film thickness was calculated based on the volume of paint used for a specific area. A wet film thickness (WFT) of around 230 μm was applied which corresponds to a dry film thickness (DFT) of 130 μm. After the paint film had dried, the adhesion was evaluated by making 'X' shaped cuts in the coating using a sharp cutting blade with uniform perpendicular pressure to the test surface by moving the cutting tool in the direction approaching the operator. The cuts marked or scratched the substrate (without going too deep into it). Each of the cuts was 40 mm long that intersected near their middle with a smaller angle of between 30 and 45°. Any loose paint was removed from the cut area with the help of a soft brush. Before initiation of testing, two complete laps of a standard pressure-sensitive tape were removed from the roll and discard. An additional length was removed at a steady rate (not jerked) and a piece of about 75 mm long was cut.

The centre of the tape was placed over the cut in a direction parallel to the X-cut and smoothed into place over the area of the cut by finger, taking care not to entrap air under the tape. Within 60 ± 30 sec after applying the tape, the tape was removed by seizing the free end and pulling it off steadily (not jerked) in 0.5 sec to 1 sec back upon itself at an angle which is as close as possible to 60°.

The test was repeated in two other locations on each test panel. The distance of the cuts from each other and from an edge of the panel should be minimum 2-3 cm.

The coating is considered to pass if no adhesion failure happens between the paint system and the substrate, i.e., no paint comes off with the adhesive tape. Sometimes a failure can happen within the substrate. If this happens the coating evaluated still passes the test as the failure is within the substrate.

**• Application of first and second coating compositions to the substrates used for Evaluation of Application Properties (spray application, 2nd coating layer), Determination of cracking, Texture/Pattern, Water resistance, Overall Hiding and Adhesion**

The first coating composition was diluted, mixed manually and applied using a 9"/ 23 cm Medium Pile (10 mm) Blue Polyester emulsion paint roller directly on cementitious substrate in vertical strokes. Due to the rough surface of the substrate, a theoretical film thickness was calculated based on the volume of paint used for a specific area. A wet film thickness (WFT) of around 230 $\mu$m was applied which corresponds to a dry film thickness (DFT) of 130 $\mu$m. The paint was dried for (4-6 hours). The second coating composition was applied by means of hopper gun connected to a compressor supplying pressurized air at 2 bars. The hopper gun opening ranges between 3.75 mm to 6 mm in diameter depending on the type of desired finishing and droplet size. Due to the rough surface, a theoretical film thickness was calculated based on the volume of paint used for a specific area. A wet film thickness around 1000 $\mu$m were applied which corresponds to a dry film thickness of 600 $\mu$m.

For the examples (S1-S8, CS1-CS2 and CS4) having one coat of second coating composition the resulting paint films were lightly pressed with a plastic roller dipped in Jotun Thinner Number 2 solvent (white spirit) after the paint droplets surface has slightly dried to the touch.

For example S8 the paint droplets were not pressed with a roller. An additional coat of the second coating composition was applied. The second coating composition (forming the third coat) was applied by means of hopper gun connected to a compressor supplying pressurized air at 2 bars. The hopper gun opening ranges between 3.75 mm to 6 mm in diameter depending on the type of desired finishing and droplet size. Due to the rough surface, a theoretical film thickness was calculated based on the volume of paint used for a specific area. A wet film thickness around 1000 $\mu$m were applied which corresponds to a dry film thickness of 600 $\mu$m. The paint droplets were not pressed with a roller.

**• Evaluation of Application Properties (spray application) for second coating layer**

The coating was evaluated for the ease of application, wet hiding, overlap, sprayability and sagging on a rating scale form 1-5 where 5 is excellent and 1 is worst. To pass the test a rating of at least 3 is needed.

**• Determination of Cracking**

Before evaluating cracking the applied paints were dried for 24 h at ambient temperature. The pressed droplets were assessed for formation of fine and hair cracks by naked eye or with the help of a magnifying lens glass. To pass the test no cracks should be visible.

**• Determination of Texture/Pattern**

The texture/pattern were assessed. The following factors were assessed; the general droplets size, uniformity of texture distribution, thickness of pressed droplets, patchiness, sagging and other aesthetic aspects. The texture/pattern were compared with the commercially available four coat system.

**• Determination of Water Resistance**

After the paint was dried for 24 h at ambient temperature, water was sprayed on the paint film. The surface was directly rubbed with finger. The test is passed if no film disintegration (no marks on paint film, no discoloration of finger) is observed.

**• Determination of Overall Hiding**

After the paint had properly dried (4-6 hours) the coating was evaluated visually from different angles. To pass the test, the substrate and the roller marks (from the first coat) are no longer visible.

**• Determination of Adhesion**

The adhesion for the overall coating was evaluated as described for the evaluation of adhesion for the first coating layer.

**• Determination of Natural Weathering exposure in Dubai**

The testing were performed in Dubai U.A.E. The surface temperature of the substrate was measured before paint application. Application was only made if the substrate temperature was below 50°C and above 10°C.

21 cm x 30 cm x 0.6 cm thick cement fibre board panels were used. One layer of the first coating composition was applied by using a roller (approx. 230 $\mu$m WFT) and allowed to dry for 24 hrs at 23$\pm$2°C 60$\pm$5% Rh. The second coating composition was applied on top by means of hopper gun (approx. 1000 $\mu$m WFT). The details for the roller and hopper gun were the same as described in the application section. The paint surface was pressed afterwards as described in the application section. The back side of the panel was left untreated. The panels were left to dry indoors at 23$\pm$2°C 60$\pm$5% Rh for 7 days. The panels were exposed on racks in Dubai at 45 degrees and 90 degrees angles facing South direction.

The panels were evaluated after 6 months. The panels were evaluated initially, then the panels were evaluated after brushing (using a brush gently) and then also after being washed with water. The panels were also compared with unexposed panels that had been kept indoors. To pass the test there should be no chalking, no cracking and no flaking. The dirt pick up should be at least equal (i.e. no worse than) to the commercially available 4 coat system to pass the test.

**• Determination of Accelerated Weathering (UV resistance)**

The UV resistance was determined using a modified version of ASTM G154. For each example, two panels were prepared. 7.5 x 14.5 x 0.6 cm cement fibre board panels were used. One layer of the first coating composition was applied (approx. 230 $\mu$m WFT) and allowed to dry for 24 hrs at 23$\pm$2°C 60$\pm$5% Rh. On one panel the second coating composition was applied by means of hopper gun (approx. 1000 $\mu$m WFT) and then the paint surface was pressed with a roller as described in the application section. The details for the roller and hopper gun were the same as described in the application section. On the second panel, the second coating composition was applied with a trowel to obtain a smooth finish (approx. 1000 $\mu$m WFT). This panel with the smooth finish was used to measure DL and DE values in the spectrophotometer. The back side of the panel was left untreated.

The panels were exposed in a QUV accelerated weathering tester, model QUV/SE. The panels were exposed in cycles as defined in ASTM G154 - Cycle 1 in Model [QUV/SE]. The panels were evaluated every 500 h. The evaluation listed in the tables are the exposure after 2000 h. The panels were compared with unexposed panels. To pass the test there should be no cracking and no flaking. The chalking and colour retention should be at least equal (i.e. no worse) to the commercially available 4 coat system.

**• Determination of Natural Weathering exposure in India**

15 cm x 30 cm x 0.5 cm thick cement fibre board panels were used. One layer of the first coating composition was applied (approx. 200 to 250 $\mu$m WFT) and allowed to dry for 24 hrs at 23$\pm$2°C 60$\pm$5% Rh. The second coating composition was applied on top by means of hopper gun (approx. 1000 $\mu$m WFT). The details for roller and hopper gun were the same as described in the application section. The paint surface was pressed afterwards as described in the application section. The back side and edges of the panel were sealed with any acrylic matt paint. The panels were left to dry indoors at 23$\pm$2°C 60$\pm$5% Rh for minimum 7 days. The panels were exposed on racks at Calicut (Kozhikode), in Southern state of Kerala in India at 45 degrees angle facing South-West direction. The panels were exposed for one monsoon season (October to December).

The panels were evaluated by visual assessment as well as under microscope. Ratings were given on a scale of 0 to 5:

0 No detectable growth.
1 Traces of growth, mould on 0-1 % of the surface area.
2 Low growth, mould on 1-10% of the surface area.
3 Moderate growth, mould on 11-30% of the surface area.
4 Strong growth, mould on 31-70% of the surface area.
5 Overgrown, mould on more than 70% of the surface area.

**• Calculating PVC and vol% solids**

According to ISO 4681/1 the PVC refers to the ratio of the volume of pigment and other solids particles in a product to the total volume of the non-volatile matter.

In order to be able to calculate the Pigment Volume Concentration (PVC) of a coating from a formulation expressed in proportions by weight, the non-volatile content and density of every component of the coating material is required. From these parameters the approximate volume of the individual components in the coating film can be calculated.

The following equation was used for the calculation of PVC (European Coatings Handbook, Ulrich Zorll, Vincent Verlag 2000*):*

$$\text{PVC [\%]} = \frac{\sum V \text{pigments} + \sum V \text{fillers}}{\sum V \text{pigments} + \sum V \text{fillers} + \sum V \text{binders}} * 100$$

$$= \frac{\sum V \text{pigments} + \sum V \text{fillers}}{\sum V \text{total}} * 100$$

The following equations were used to calculate vol% solids:

$$\text{Volume} = (\text{weight} / \text{density})$$

$$\text{Vol\% solid} = \frac{\sum \text{Vol pigments and filler} + \sum \text{Vol solid binder} + \sum \text{Vol solid additives}}{\text{Total wet paint volume}} * 100$$

**• Calculation of Volatile Organic Compounds (VOC)**

The Volatile Organic Compounds, VOC (g/L) of the coating compositions was calculated as follows:

$$\text{VOC [g/L]} = \frac{\text{total weight VOC [g]}}{(\text{weight paint} / \text{measured density paint}) \text{ [L]}}$$

**Coating compositions**

Tables 3 and 4 below set out the constituents of the first coating compositions tested. Comparative example CA1 lacks an inorganic filler (a). Comparative examples CA2 and CA3 have a Stormer viscosity of greater than 120 KU.

Table 3

| Ingredients (wt%) | Inventive examples | | | | | Comparative example |
|---|---|---|---|---|---|---|
| | A1 | A2 | A3 | A4 | A5 | CA1 |
| Poly(meth)acrylate dispersion | 13,00 | 13,00 | 13,00 | 16,00 | 17,00 | 6,01 |
| Filler (a) - 1 | 43,00 | 43,00 | 43,00 | 48,00 | - | - |
| Filler (b) - 1 | 11,50 | - | - | 11,50 | 28,00 | 44,50 |
| Filler (b) - 2 | - | 16,00 | - | - | - | - |
| Filler (b) - 3 | - | - | 17,50 | - | - | - |
| Filler (c) - 1 | 8,50 | - | 5,00 | 8,50 | 28,00 | 16,89 |
| Filler (c) - 2 | - | 4,00 | - | - | - | - |
| Filler (c) - 3 | | | | | | 7,02 |
| Titanium dioxide | 9,50 | 9,50 | 7,00 | - | 11,00 | 6,50 |
| Boiled Linseed oil | 0,50 | 0,50 | 0,50 | 0,50 | - | - |
| Wetting and Dispersing agents | 1,00 | 1,05 | 1,05 | 1,10 | 0,85 | 0,36 |

(continued)

| Ingredients (wt%) | Inventive examples | | | | | Comparative example |
|---|---|---|---|---|---|---|
| | A1 | A2 | A3 | A4 | A5 | CA1 |
| Foam control agent | 0,45 | 0,45 | 0,55 | 0,45 | 0,20 | 0,14 |
| Thickeners | 0,28 | 0,28 | 0,25 | 0,28 | 0,40 | 1,13 |
| In-can biocides (CIT/MIT BIT) | 0,25 | 0,25 | 0,25 | 0,25 | 0,20 | 0,35 |
| Water | 10,15 | 10,10 | 10,03 | 11,60 | 12,35 | 15,08 |
| Ammonia 25wt% in water | 0,27 | 0,27 | 0,27 | 0,22 | 0,30 | 0,27 |
| 2,2,4-Trimethyl-1,3-pentanediol monoisobutyrate (Texanol) | 0,90 | 0,90 | 0,90 | 0,90 | 1,00 | 0,95 |
| Monopropylene glycol | 0,70 | 0,70 | 0,70 | 0,70 | 0,70 | 0,80 |
| **Total** | 100 | 100 | 100 | 100 | 100 | 100 |
| Calculated VOC for the examples before dilution (g/L) | 15 | 16 | 15 | 15 | 16 | 19 |
| Water added before application | 4.3 L to 16 L drum (14.4 L paint) | 4.3L to 16 L drum (14.4 L paint) | 4.3 L to 16 L drum (14.4 L paint) | 4.3 L to 16 L drum (14.4 L paint) | 4.3 L to 16 L drum (14.4 L paint) | 4.3 L to 16 L drum (14.4 L paint) |
| Dilution with water in vol% | 30 | 30 | 30 | 30 | 30 | 30 |
| Total amount of water in coating composition after dilution (vol%) | 50 | 50 | 50 | 50 | 55 | 53 |
| Total amount of water in coating composition after dilution (wt%) | 29 | 29 | 29 | 29 | 29 | 29 |
| PVC | 80 | 80 | 80 | 77 | 76 | 90 |
| Stormer viscosity after dilution (KU) | 105 | 108 | 110 | 102 | 105 | 111 |

Table 4

| Ingredients (wt%) | Comparative examples | | Inventive examples | | |
|---|---|---|---|---|---|
| | CA2 | CA3 | A1.2 | A6 | A7 |
| Poly(meth)acrylate dispersion | 13,00 | 13,00 | 13,00 | 13,00 | 13,00 |
| Filler (a) -1 | 43,00 | 43,00 | 43,00 | 43,00 | 43,00 |
| Filler (b) -1 | 11,50 | 11,50 | 11,50 | 11,50 | 11,50 |
| Filler (c) - 1 | 8,50 | 8,50 | 8,50 | 8,50 | 8,50 |
| Titanium dioxide | 9,50 | 9,50 | 9,50 | 9,50 | 9,50 |
| Boiled Linseed oil | 0,50 | 0,50 | 0,50 | 0,50 | 0,50 |

(continued)

| Ingredients (wt%) | Comparative examples | | Inventive examples | | |
|---|---|---|---|---|---|
| | CA2 | CA3 | A1.2 | A6 | A7 |
| Wetting and Dispersing agents | 1,00 | 1,00 | 1,00 | 1,00 | 1,00 |
| Foam control agent | 0,45 | 0,45 | 0,45 | 0,45 | 0,45 |
| Thickeners | 0,28 | 0,28 | 0,28 | 0,28 | 0,28 |
| In-can biocides (CIT/MIT BIT) | 0,25 | 0,25 | 0,25 | 0,25 | 0,25 |
| Water | 10,15 | 10,15 | 10,15 | 10,15 | 10,15 |
| Ammonia 25wt% in water | 0,27 | 0,27 | 0,27 | 0,27 | 0,27 |
| 2,2,4-Trimethyl-1,3-pentanediol monoisobutyrate (Texanol) | 0,90 | 0,90 | 0,90 | 0,90 | 0,90 |
| Monopropylene glycol | 0,70 | 0,70 | 0,70 | 0,70 | 0,70 |
| **Total** | 100 | 100 | 100 | 100 | 100 |
| Water added before application | 1.45 L to a 16 L drum (14.4 L paint) | 2.9 L to a 16 L drum (14.4 L paint) | 4.3 L to a 16 L drum (14.4 L paint) | 5.8 L to a 16 L drum (14.4 L paint) | 7.2 L to a 16 L drum (14.4 L paint) |
| Dilution with water in vol% | 10 | 20 | 30 | 40 | 50 |
| Total amount of water in coating composition after dilution (vol%) | 40 | 48 | 55 | 62 | 69 |
| Total amount of water in coating composition after dilution (wt%) | 20 | 24 | 27 | 31 | 34 |
| PVC | 80 | 80 | 80 | 80 | 80 |
| Stormer viscosity after dilution (KU) | Too thick to measure | 121 | 105 | 93 | 83 |
| **Test results** | | | | | |
| Application properties and hiding 1st coat (roller application) | Rating 1 (Too thick to be applied) | Rating 2 (Difficult to apply especially in hot conditions) | Rating 5 | Rating 4 | Rating 3 (Roller marks visible. Hiding is less, substrate visible) |

Table 5 below sets out the constituents of the second coating compositions tested. Comparative example CB1 lacks filler (a). Comparative example CB2 lacks a filler (a) and has a PVC of 90.

Table 5

| Ingredients (wt%) | Inventive examples | | | | Comparative examples | |
|---|---|---|---|---|---|---|
| | B1 | B2 | B3 | B4 | CB1 | CB2 |
| Poly(meth)acryla te dispersion | 13,00 | 13,00 | 13,00 | 16,00 | 17,00 | 6,01 |

(continued)

| Ingredients (wt%) | Inventive examples | | | | Comparative examples | |
|---|---|---|---|---|---|---|
| | B1 | B2 | B3 | B4 | CB1 | CB2 |
| Filler (a) - 1 | 43,00 | 43,00 | 43,00 | 48,00 | - | - |
| Filler (b) -1 | 11,50 | - | - | 11,50 | 28,00 | 44,50 |
| Filler (b) - 2 | - | 16,00 | - | | | |
| Filler (b) - 3 | - | - | 17,50 | | | |
| Filler (c) - 1 | 8,50 | - | 5,00 | 8,50 | 28,00 | 16,89 |
| Filler (c) - 2 | - | 4,00 | - | - | - | - |
| Filler (c) - 3 | - | - | - | - | - | 7,02 |
| Titanium dioxide | 9,50 | 9,50 | 7,00 | - | 11,00 | 6,50 |
| Boiled Linseed oil | 0,50 | 0,50 | 0,50 | 0,50 | - | - |
| Wetting and Dispersing agents | 1,00 | 1,05 | 1,05 | 1,10 | 0,85 | 0,36 |
| Foam control agent | 0,45 | 0,45 | 0,55 | 0,45 | 0,20 | 0,14 |
| Thickeners | 0,28 | 0,28 | 0,25 | 0,28 | 0,40 | 1,13 |
| In-can biocides (CIT/MIT BIT) | 0,25 | 0,25 | 0,25 | 0,25 | 0,20 | 0,35 |
| Water | 10,15 | 10,10 | 10,03 | 11,60 | 12,35 | 15,08 |
| Ammonia 25wt% in water | 0,27 | 0,27 | 0,27 | 0,22 | 0,30 | 0,27 |
| 2,2,4-Trimethyl-1,3-pentanediol monoisobutyrate (Texanol) | 0,90 | 0,90 | 0,90 | 0,90 | 1,00 | 0,95 |
| Monopropylene glycol | 0,70 | 0,70 | 0,70 | 0,70 | 0,70 | 0,80 |
| **Total** | 100 | 100 | 100 | 100 | 100 | 100 |
| Calculated VOC (g/L) | 15 | 16 | 15 | 15 | 16 | 19 |
| Total amount of water in coating composition (vol%) | 32 | 32 | 32 | 35 | 42 | 37 |
| Total amount of water in coating composition (wt%) | 17 | 17 | 17 | 20 | 21 | 18 |
| PVC | 80 | 80 | 80 | 77 | 76 | 90 |
| Stormer viscosity (KU) | Too thick to measure | Too thick to measure | Too thick to measure | Too thick to measure | Too thick to measure | Too thick to measure |

The performance of the two-layered coatings was tested and the results are shown in Table 7. A commercially available four-layered coating system, as set out in Table 6 below, was also tested for comparison.

The commercially available four-layered coating system was applied according to specifications. The first coat was applied with a roller, the second coat was applied with a hopper gun, and the third and fourth coats were applied with a roller.

Table 6

| Coating system | Commercially available system, CS5 |
|---|---|
| First coat | Acrylic Emulsion Primer (Styrene Acrylic based Primer) |
| Second coat | Texo Compound (Styrene Acrylic based Texture coat) |
| Third coat | Jotashield Colourlast Matt (Pure Acrylic based Smooth Topcoat) - Tinted to Jotun colour 1046 Desert Rose |
| Fourth coat | Jotashield Colourlast Matt (Pure Acrylic based Smooth Topcoat) - Tinted to Jotun colour 1046 Desert Rose |

Table 7

| | Inventive examples | | | | Comparative Examples | | | | |
|---|---|---|---|---|---|---|---|---|---|
| Coating systems | S1 | S2 | S3 | S4 | CS1 | CS2 | CS3 | CS4 | CS5 |
| First coat | A1 | A2 | A3 | A4 | A5 | CA1 | A1 | - | |
| Second coat | B1 | B2 | B3 | B4 | CB1 | CB2 | - | B1 | |
| Test results | | | | | | | | | |
| Application properties and hiding 1st coat (roller application) | Rating 5 | Rating 5 | Rating 5 | Rating 5 | Rating 4 | Rating 4 | Rating 5 | Not tested (impossible to apply with roller) | Rating 2 (Substrate clearly visible) |
| Adhesion (1st coat) | Pass | Pass | Pass | Pass | Pass | Fail | Pass | Fail | Pass |
| Application properties 2nd coat (spray application) | Rating 5 | Rating 5 | Rating 5 | Rating 5 | Rating 2 | Rating 5 | Not tested | Rating 5 | Rating 5 |
| Cracking | Pass | Pass | Pass | Pass | Fail | Pass | Not tested | Pass | Pass |
| Overall hiding | Pass | Pass | Pass | Pass | Pass | Pass | Not tested | Fail | Pass |
| Texture/ Pattern | Pass | Pass | Pass | Pass | Pass | Pass | No texture - Fail | Fail | Pass |
| Adhesion (overall coating) | Pass | Pass | Pass | Pass | Pass | Fail | Not tested | Not relevant | Pass |
| Water resistance | Pass | Pass | Pass | Pass | Pass | Fail | Not tested | Fail | Pass |
| Natural Weathering exposure in Dubai | Pass | Pass | Pass | Pass | Pass | Fail | Not tested | Not tested | Pass |
| Accelerated weathering | Pass | Pass | Pass | Pass | Pass | Fail | Not tested | Not tested | Pass |

The results show that two-layered coatings prepared with the coating system of the present invention achieve a comparable performance to the commercially available four-layered coatings currently employed. The two-layered coatings of the invention provide a textured look, which is aesthetically pleasing and achieves hiding, and the coating has good adhesion to the substrate, is water resistant, UV resistant and has relatively low dirt pick up. The results in Table 7 versus the comparative examples show that each of the first and second coatings compositions of the present invention contribute to the performance achieved.

**General procedure for the preparation of multi-coloured tinted coatings**

16 L paint cans were used to prepare tinted versions of the coating compositions. First and second coating compositions were tinted to a specific colour using Jotun's multicolor tinting machine and software, as summarised in Table 8 below. The software contains the proprietary colour formulations, and is programmed to instruct the multicolor tinting machine to add a specific combination and specific amount of tinters, depending on the chosen colour. Before the tinters were added, the paint was mixed for 1 minute using a Gyro shaker. After the tinters were added to the paint, the paint was mixed for 3 minutes using a Gyro shaker, which gave coating compositions with homogenous colour.

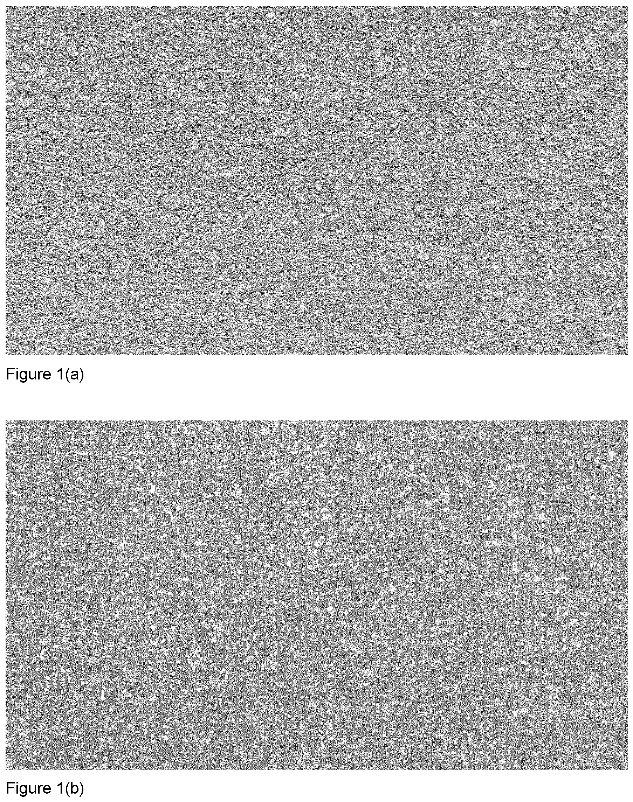

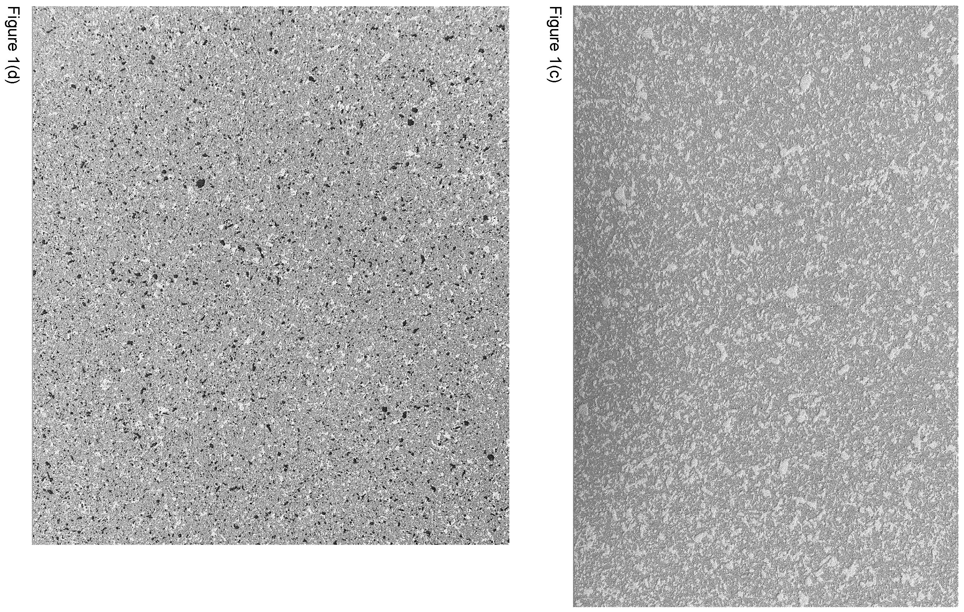

The performance of the resulting multi-coloured tinted coatings was then tested and the results are shown in Table 8 and in Figures 1(a)-(d). Figure 1(a) shows a picture of a two-layered coating comprising the same tint in each layer. Figures 1(b) and 1(c) each show a picture of a two-layered coating, wherein each layer comprises a different tint. Figure 1(d) shows a picture of a three-layered coating, wherein each layer comprises a different tint.

Table 8

| Coating system | S5 | S6 | S7 | S8 |
|---|---|---|---|---|
| First coat | A1 - Tinted to Jotun colour 1046 Desert Rose | A1 - Tinted to Jotun colour 4665, NCS 2823-R84B | A1 - Tinted to Jotun colour 1876 Wild Earl | A1 - Tinted to Jotun colour 1973 Objective |
| Second coat | B1-Tinted to Jotun colour 1046 Desert Rose | B1-Tinted to Jotun colour 4094, NSC0718-R82B | B1-Tinted to Jotun colour 9918 Classic White | B1-Tinted to Jotun colour 9918 Classic White |
| Third coat | | | | B1 - Tinted to Jotun colour 5366 Tar |
| **Test results** | | | | |
| Application properties and hiding 1st coat (roller application) | Rating 5 | Rating 5 | Rating 5 | Rating 5 |
| Adhesion (1st coat) | Pass | Pass | Pass | Pass |
| Application properties 2nd coat (spray application) | Rating 5 | Rating 5 | Rating 5 | Rating 5 |
| Cracking | Pass | Pass | Pass | Pass |
| Overall hiding | Pass | Pass | Pass | Pass |
| Pattern | Pass | Pass | Pass | Pass |
| Adhesion (overall coating) | Pass | Pass | Pass | Pass |
| Water resistance | Pass | Pass | Pass | Pass |
| Natural Weathering exposure in Dubai | Pass | Pass | Pass | Pass |
| Accelerated weathering | Pass | Pass | Pass | Pass |

The results show that the coating compositions of the coating system can each be tinted and that advantageously different tints may be used in each layer to achieve desirable aesthetic effects. This is a significant advantage of the coating system of the present invention over commercially available options, which cannot generally be tinted due to their highly viscous nature.

**General procedure for the preparation of coating compositions comprising biocides**

The coating compositions were prepared by the same general procedure described above, with the addition of dry film biocides. The dry film biocides were added before the let-down.

The components of the coating compositions were mixed in the proportions set out in Table 9 below, wherein amounts are given in wt% (unless otherwise specified). A number of comparative examples were also prepared.

The performance of the multi-layered coatings was tested according to the test methods set out above, and the results are shown in Table 10 below.

Table 9 Coating compositions containing dry film biocides

| Ingredients (wt%) | A8 | B5 |
|---|---|---|
| Poly(meth)acrylate dispersion | 13,00 | 13,00 |
| Filler (a) - 2 | 42,00 | 42,00 |
| Filler (b) - 4 | 11,50 | 11,50 |
| Filler (c) - 4 | 9,00 | 9,00 |
| Titanium dioxide | 8,00 | 8,00 |
| Boiled Linseed oil | 0,50 | 0,50 |
| Wetting and Dispersing agents | 1,00 | 1,00 |
| Foam control agent | 0,40 | 0,40 |
| Thickener | 0,25 | 0,25 |
| In-can biocides (CIT/MIT BIT) | 0,25 | 0,25 |
| Diuron (50 % solids) | 2,50 | 2,50 |
| Carbendazim (7.5 ppm), Diuron (20 ppm) OIT (2.7 ppm) in water | 2,00 | 2,00 |
| Ammonia 25wt% in water | 0,27 | 0,27 |
| Water | 7,73 | 7,73 |
| Monopropylene glycol | 0,70 | 0,70 |
| 2,2,4-Trimethyl-1,3-pentanediol monoisobutyrate (Texanol) | 0,90 | 0,90 |
| Total | 100 | 100 |
| Calculated VOC for the examples before dilution (g/L) | 21 | 21 |
| Water added before application | 4.3 L to 16 L drum (14.4 L paint) | - |
| Dilution with water in vol% | 30 | - |
| Total amount of water in coating composition after dilution (vol%) | 50 | - |
| Total amount of water in coating composition after dilution (wt%) | 29 | - |
| PVC | 80 | 80 |
| Stormer viscosity after dilution (KU) | 105 | Too thick to measure |

Table 10 Coating systems containing dry film biocide

| | Inventive examples | | Comparative Examples | |
|---|---|---|---|---|
| Coating systems | S9 | S10 | CS7 | CS8 |

(continued)

|  | Inventive examples | | Comparative Examples | |
|---|---|---|---|---|
| First coat | A8 | A8 - Tinted to Jotun colour 1046 Desert Rose | Acrylic Emulsion Primer (Styrene Acrylic based Primer) | Acrylic Emulsion Primer (Styrene Acrylic based Primer) |
| Second coat | B5 | B5 - Tinted to Jotun colour 1046 Desert Rose | Texo Compound (Styrene Acrylic based Texture coat) | Texo Compound (Styrene Acrylic based Texture coat) |
| Third coat | - | - | Jotashield Colourlast Matt (Pure Acrylic based Smooth Topcoat) (containing Diuron and Carbendazim) | Jotashield Colourlast Matt (Pure Acrylic based Smooth Topcoat) (containing Diuron and Carbendazim) - Tinted to Jotun colour 1046 Desert Rose |
| Fourth coat | - | - | Jotashield Colourlast Matt (Pure Acrylic based Smooth Topcoat) (containing Diuron and Carbendazim) | Jotashield Colourlast Matt (Pure Acrylic based Smooth Topcoat) (containing Diuron and Carbendazim) - Tinted to Jotun colour 1046 Desert Rose |
| **Natural Weathering exposure in India - one monsoon season** | | | | |
| Rating for Algae | 0 | 0 | 0 | 0 |
| Rating for Fungi | 1 | 1 | 1 | 1 |
| Visual assessment | Low coverage | Low coverage | Low coverage | Low coverage |

The results show that the coating compositions of the coating system can additionally comprise dry film biocides, and the resulting coatings exhibit strong antialgae and anti-fungi performance.

**Claims**

1.  A coating system for preparing a multi-layered coating, preferably a textured and/or tinted, multi-layer coating, wherein said system comprises a first coating composition and a second coating composition, wherein:

    said first coating composition comprises:

    (i) an organic polymer dispersion;
    (ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and
    (iii) 10-50 wt% water,

    and said first coating composition has a PVC of 60-89 and a Stormer viscosity of 80-120 KU, and said second coating composition comprises:

    (iv) an organic polymer dispersion;
    (v) an inorganic filler (a) having a $D_{98}$ of greater than 100 $\mu$m;

(vi) an inorganic filler (b) having a $D_{98}$ of 25-250 $\mu$m;

(vii) preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c); and

(viii) water, preferably 5-30 wt% water,

and said second coating composition has a PVC of 60-89.

2.  A coating system as claimed in claim 1, wherein said first and/or second coating composition comprises an organic polymer dispersion comprising a polymer comprising monomers selected from (meth)acrylate, acrylamide, vinyl and/or styrenic monomers (e.g. styrene, $\alpha$-methyl styrene, vinyl toluene, vinyl acetate, vinyl esters of versatic acids).

3.  A coating system as claimed in any preceding claim, wherein said first and/or second coating composition comprises inorganic filler (a), inorganic filler (b) and inorganic filler (c) and/or said inorganic fillers (a), (b) and (c) each comprise calcite or dolomite.

4.  A coating system as claimed in any preceding claim, wherein in said first and/or said second coating composition, said inorganic filler (a) has a $D_{98}$ of greater than 200 $\mu$m, more preferably greater than 250 $\mu$m and still more preferably greater than 300 $\mu$m; and/or said inorganic filler (b) has a $D_{98}$ of 25-250 $\mu$m, more preferably 50-200 $\mu$m, still more preferably 70-150 $\mu$m and yet more preferably 90-125 $\mu$m; and/or said inorganic filler (c) has a $D_{98}$ of 10-70 $\mu$m, more preferably 20-60 $\mu$m and still more preferably 35-55 $\mu$m.

5.  A coating system as claimed in any preceding claim, wherein said first coating composition comprises 10-60 wt%, preferably 20-55 wt%, and still more preferably 25-45 wt% of inorganic filler (a), based on the total weight of the composition; and/or comprises 2-30 wt%, preferably 3-25 wt%, and still more preferably 4-20 wt% of inorganic filler (b), based on the total weight of the composition; and/or comprises 0.1-30 wt%, preferably 0.5-25 wt%, and still more preferably 1-20 wt% of inorganic filler (c), based on the total weight of the composition.

6.  A coating system as claimed in any preceding claim, wherein said second coating composition comprises 30-60 wt%, preferably 35-45 wt% and still more preferably 40-50 wt% of inorganic filler (a), based on the total weight of the composition; and/or comprises 5.0-30 wt%, preferably 7.0-25 wt% and still more preferably 8.0-20 wt% of inorganic filler (b), based on the total weight of the composition; and/or 0.1-30 wt%, preferably 0.5-20 wt% and still more preferably 1-10 wt% of inorganic filler (c), based on the total weight of the composition.

7.  A coating system as claimed in any preceding claim, wherein said first coating composition comprises a greater wt% water than said second coating composition, and preferably said first coating composition comprises 15-40 wt%, more preferably 20-35 wt% and still more preferably 25-34 wt% water, based on the total weight of the composition.

8.  A coating system as claimed in any preceding claim, wherein said first and/or second coating composition comprises a dry film biocide, and/or said first and/or second coating composition comprises at least 4 colour pigments.

9.  A multi-layered coating on a surface, preferably on a surface of a mineral substrate, wherein said coating is formed from a coating system as claimed in any one of claims 1 to 8, and preferably wherein the multi-layered coating comprises a first coating layer and a second coating layer, wherein said first coating layer is formed from a first coating composition as defined in any one of claims 1 to 8, and said second coating layer is formed from a second coating composition as defined in any one of claims 1 to 8.

10. Use of a coating system as claimed in any one of claims 1 to 8 to form a multi-layered coating on a substrate, preferably a mineral substrate.

11. A method of preparing a multi-layered coating on a surface, wherein said method comprises:

(i) applying a first coating composition as defined in any one of claims 1 to 8;

(ii) drying said first coating composition to form a first coating layer;

(iii) applying a second coating composition as defined in any one of claims 1 to 8; and

(iv) drying said second coating composition to form a second coating layer.

**12.** A method of preparing a coating system as claimed in any one of claims 1 to 8, comprising:

(i) preparing a first coating composition by mixing an organic polymer dispersion, at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler; and 10-50 wt% water; and

(ii) preparing a second coating composition by mixing an organic polymer dispersion, an inorganic filler (a) having a $D_{98}$ of greater than 100 $\mu$m, an inorganic filler (b) having a $D_{98}$ of 25-250 $\mu$m, and preferably an inorganic filler (c) having a $D_{98}$ of 5-100 $\mu$m, wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c) and 5-30 wt% water.

**13.** A base coating composition comprising:

(i) an organic polymer dispersion;
(ii) at least two inorganic fillers selected from (a), (b) and (c), wherein inorganic filler (a) has a $D_{98}$ of greater than 100 $\mu$m, inorganic filler (b) has a $D_{98}$ of 25-250 $\mu$m; and inorganic filler (c) has a $D_{98}$ of 5-100 $\mu$m, and wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(iii) optionally $TiO_2$;
(iv) less than 0.5 wt% colour pigment other than $TiO_2$; and
(v) 5-30 wt% water,

and said coating composition has a PVC of 60-89.

**14.** A coating composition comprising:

(i) an organic polymer dispersion;
(ii) an inorganic filler (a) having a $D_{98}$ of greater than 100 $\mu$m;
(iii) an inorganic filler (b) having a $D_{98}$ of 25-250 $\mu$m;
(iv) an inorganic filler (c) having a $D_{98}$ of 5-100 $\mu$m; wherein the $D_{98}$ of said inorganic filler (a) is greater than the $D_{98}$ of said inorganic filler (b) and the $D_{98}$ of said inorganic filler (b) is greater than the $D_{98}$ of said inorganic filler (c);
(v) preferably at least four colour pigments;
(vi) preferably a dry film biocide; and
(vii) water, preferably 10-50 wt% or 5-30 wt% water

and said coating composition has a PVC of 60-89.

**15.** A container comprising a coating composition as claimed in claim 13 or 14.

Figure 1(a)

Figure 1(b)

Figure 1(c)

Figure 1(d)

Europäisches
Patentamt

European
Patent Office

Office européen
des brevets

# EUROPEAN SEARCH REPORT

**Application Number**

EP 22 15 7618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/019356 A1 (ICI PLC [GB]; HORLEY SUSAN MARY [GB] ET AL.) 3 March 2005 (2005-03-03) * page 7, line 16 – page 9, line 25 * * page 13, line 6 – line 11 * * page 13, line 22 – line 26 * * page 14, line 18 – line 20 * * claims 1-14 * | 1-15 | INV. C09D5/02 C09D7/63 C09D7/40 C09D133/04 C09D7/61 B05D7/00 |
| X | EP 2 182 033 A1 (AKZO NOBEL COATINGS INT BV [NL]) 5 May 2010 (2010-05-05) | 13,15 | |
| A | * paragraph [0009] * * paragraph [0011] * * paragraph [0018] – paragraph [0019] * * paragraph [0027] – paragraph [0034] * * paragraph [0064] – paragraph [0070]; examples 1-3 * | 1-12,14 | |
| X | EP 1 125 643 A2 (FRIEL JOHN MICHAEL [US]; HOOK JOHN WILLIAM III [US] ET AL.) 22 August 2001 (2001-08-22) | 13,15 | TECHNICAL FIELDS SEARCHED (IPC) |
| A | * paragraph [0085]; example 3 * * paragraph [0008] * * paragraph [0067] – paragraph [0069] * * claims 1-30 * | 1-12,14 | C09D C08F C08K C23D B05D |

The present search report has been drawn up for all claims

| Place of search | Date of completion of the search | Examiner |
|---|---|---|
| Munich | 29 July 2022 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                         

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 7618

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2022

| Patent document cited in search report | | Publication date | Patent family member(s) | | Publication date |
|---|---|---|---|---|---|
| WO 2005019356 | A1 | 03-03-2005 | BR | PI0413628 A | 17-10-2006 |
| | | | CA | 2534712 A1 | 03-03-2005 |
| | | | EP | 1512727 A1 | 09-03-2005 |
| | | | MX | PA06002054 A | 19-05-2006 |
| | | | MY | 141806 A | 30-06-2010 |
| | | | US | 2007131916 A1 | 14-06-2007 |
| | | | WO | 2005019356 A1 | 03-03-2005 |
| EP 2182033 | A1 | 05-05-2010 | AT | 510889 T | 15-06-2011 |
| | | | DK | 2182033 T3 | 19-09-2011 |
| | | | EP | 2182033 A1 | 05-05-2010 |
| | | | ES | 2367063 T3 | 28-10-2011 |
| | | | PL | 2182033 T3 | 31-10-2011 |
| EP 1125643 | A2 | 22-08-2001 | AR | 027452 A1 | 26-03-2003 |
| | | | AU | 782576 B2 | 11-08-2005 |
| | | | BR | 0102856 A | 06-08-2002 |
| | | | CA | 2334289 A1 | 18-08-2001 |
| | | | CN | 1317521 A | 17-10-2001 |
| | | | EP | 1125643 A2 | 22-08-2001 |
| | | | ID | 29559 A | 06-09-2001 |
| | | | JP | 2001279188 A | 10-10-2001 |
| | | | KR | 20010082744 A | 30-08-2001 |
| | | | SG | 102615 A1 | 26-03-2004 |
| | | | TW | I293325 B | 11-02-2008 |
| | | | US | 2003110101 A1 | 12-06-2003 |
| | | | US | 2005038557 A1 | 17-02-2005 |
| | | | ZA | 200205921 B | 20-10-2003 |
| | | | ZA | 200205923 B | 24-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ULRICH ZORLL.** European Coatings Handbook. Vincent Verlag, 2000